# EUROPEAN PATENT SPECIFICATION

(11) **EP 4 409 991 B1**
(45) Date of publication and mention of the grant of the patent: **23.07.2025**
(21) Application number: 22790063.6
(22) Date of filing: 30.09.2022
(51) Int. Cl.: H04W 72/56, H04W 64/00, H04W 88/08

(54) **CONFIGURING AND INDICATING POSITIONING AND DATA TRAFFIC PRIORITIES**
KONFIGURATION UND ANZEIGE VON POSITIONIERUNGS- UND DATENVERKEHRSPRIORITÄTEN
CONFIGURATION ET INDICATION DE PRIORITÉS DE POSITIONNEMENT ET DE TRAFIC DE DONNÉES

(30) Priority: 01.10.2021 US 202163251248 P
(43) Date of publication of application: 07.08.2024
(73) Proprietor: Telefonaktiebolaget LM Ericsson (publ), 164 83 Stockholm (SE)
(72) Inventor: SHREEVASTAV, Ritesh, 194 47 Upplands Väsby (SE); MUNIER, Florent, 426 53 Västra Frölunda (SE); MURUGANATHAN, Siva, Stittsville, Ontario K2S 0R3 (CA); JIANG, Xiaolin, SE- 28 246 Linköping (SE); LYAZIDI, Yazid, SE1 5ZW London (GB); ERNSTRÖM, Per, 117 50 Stockholm (SE)
(74) Representative: Ericsson
(86) International application number: PCT/IB2022/059369
(87) International publication number: WO 2023/053095

(56) References cited:
- ERICSSON: "TP to NRPPa BL CR: Addition of On-demand DL-PRS information", vol. RAN WG3, no. Online; 20210816 - 20210826, 5 August 2021 (2021-08-05), XP052032869, Retrieved from the Internet <URL:https://ftp.3gpp.org/tsg_ran/WG3_Iu/TSGR3_113-e/Docs/R3-213854.zip R3-213854 TP for DL PRS NRPPa.docx> [retrieved on 20210805]
- VIVO: "Remaining issues on physical layer procedure for NR positioning", vol. RAN WG1, no. e-Meeting; 20200817 - 20200828, 8 August 2020 (2020-08-08), XP051917383, Retrieved from the Internet <URL:https://ftp.3gpp.org/tsg_ran/WG1_RL1/TSGR1_102-e/Docs/R1-2005358.zip R1-2005358 procedure.docx> [retrieved on 20200808]
- INTERDIGITAL INC: "Discussion on potential positioning enhancements", vol. RAN WG1, no. e-Meeting; 20201026 - 20201113, 16 October 2020 (2020-10-16), XP051940175, Retrieved from the Internet <URL:https://ftp.3gpp.org/tsg_ran/WG1_RL1/TSGR1_103-e/Docs/R1-2008491.zip R1-2008491_103e_POS_853_ENH_SUBMIT.docx> [retrieved on 20201016]
- VIVO: "Discussion on inactive state positioning and on-demand PRS", vol. RAN WG1, no. e-Meeting; 20210816 - 20210827, 7 August 2021 (2021-08-07), XP052037906, Retrieved from the Internet <URL:https://ftp.3gpp.org/tsg_ran/WG1_RL1/TSGR1_106-e/Docs/R1-2106600.zip R1-2106600 Discussion on inactive state positioning and on-demand PRS.docx> [retrieved on 20210807]

## Description

### TECHNICAL FIELD

The present disclosure generally relates to wireless communications and wireless communication networks.

### INTRODUCTION

Standardization bodies such as Third Generation Partnership Project (3GPP) are studying potential solutions for efficient operation of wireless communication in new radio (NR) networks. The next generation mobile wireless communication system 5G/NR will support a diverse set of use cases and a diverse set of deployment scenarios. The later includes deployment at both low frequencies (e.g. 100s of MHz), similar to LTE today, and very high frequencies (e.g. mm waves in the tens of GHz). Besides the typical mobile broadband use case, NR is being developed to also support machine type communication (MTC), ultra-low latency critical communications (URLCC), side-link device-to-device (D2D) and other use cases.

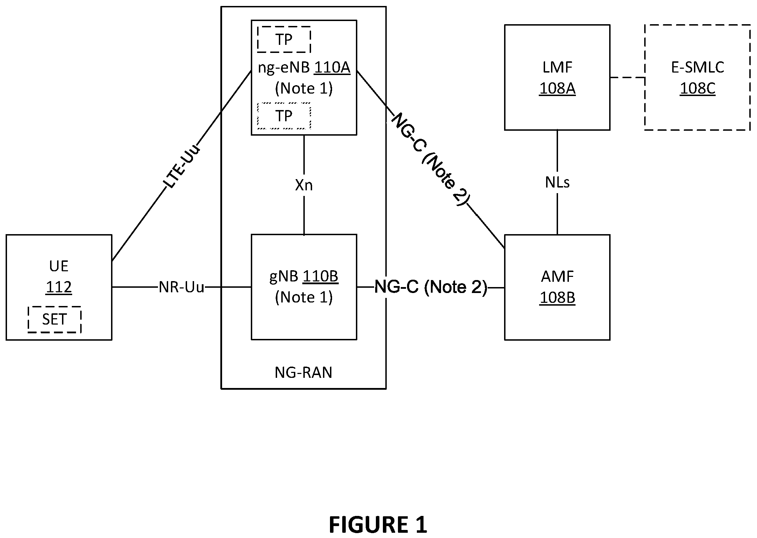

Positioning and location services have been topics in LTE standardization since 3GPP Release 9. An objective was to fulfill regulatory requirements for emergency call positioning but other use case like positioning for Industrial Internet of Things (I-IoT) are also considered. Positioning in NR is supported by the example architecture shown in Figure 1. LMF 108A represents the location management function entity in NR. There are also interactions between the LMF 108A and the gNodeB 110 via the NRPPa protocol. The interactions between the gNodeB 110 and the device (UE) 112 are supported via the Radio Resource Control (RRC) protocol, while the location node 108A interfaces with the UE 112 via the LTE positioning protocol (LPP). LPP is common to both NR and LTE technologies. Other network nodes, such as Access and Mobility Management Function (AMF) 108B and evolved Serving Mobile Location Center (e-SMLC) 108C, may be involved in positioning support.

It will be appreciated that while Figure 1 shows gNB 110B and ng-eNB 110A, both may not always be present. It is noted that when both the gNB 110B and ng-eNB 110A are present, the NG-C interface is generally only present for one of them.

In the legacy LTE standards, the following techniques are supported:
- Enhanced Cell ID. Essentially cell ID information to associate the device to the serving area of a serving cell, and then additional information to determine a finer granularity position.
- Assisted Global Navigation Satellite System (GNSS). GNSS information retrieved by the device, supported by assistance information provided to the device from E-SMLC
- OTDOA (Observed Time Difference of Arrival). The device estimates the time difference of reference signals from different base stations and sends to the E-SMLC for multilateration.
- UTDOA (Uplink TDOA). The device is requested to transmit a specific waveform that is detected by multiple location measurement units (e.g. an eNB) at known positions. These measurements are forwarded to E-SMLC for multilateration.

The NR positioning for Release 16, based on the 3GPP NR radio-technology, is positioned to provide added value in terms of enhanced location capabilities. The operation in low and high frequency bands (i.e. below and above 6GHz) and utilization of massive antenna arrays provide additional degrees of freedom to substantially improve the positioning accuracy. The possibility to use wide signal bandwidth in low and especially in high bands brings new performance bounds for user location for well-known positioning techniques based on OTDOA and UTDOA, Cell-ID or E-Cell-ID etc., utilizing timing measurements to locate a UE.

In NR Release 16, several positioning features have been specified including reference signals, measurements, and positioning methods.

### Reference signals:

- A new downlink (DL) reference signal, the NR DL Positioning Reference Signal (PRS) was specified. A benefit of this signal in relation to the LTE DL PRS is the increased bandwidth, configurable from 24 to 272 RBs, which gives a big improvement in Time of Arrival (TOA) accuracy. The NR DL PRS can be configured with a comb factor of 2, 4, 6 or 12. Comb-12 allows for twice as many orthogonal signals as the comb-6 LTE PRS. Beam sweeping is also supported on NR DL PRS in Rel-16.
- A new uplink (UL) reference signal, based on the NR UL SRS was introduced and called "SRS for positioning". The Release 16 NR SRS for positioning allows for a longer signal, up to 12 symbols (compared to 4 symbols in Rel. 15 SRS), and a flexible position in the slot (only last six symbols of the slot can be used in Rel. 15 SRS). It also allows for a staggered comb RE pattern for improved TOA measurement range and for more orthogonal signals based on comb offsets (comb 2, 4 and 8) and cyclic shifts. The use of cyclic shifts longer than the OFDM symbol divided by the comb factor is, however, not supported by Rel. 16 despite that this is the main advantage of comb-staggering at least in indoor scenarios. Power control based on neighbor cell SSB/DL PRS is supported as well as spatial QCL relations towards a CSI-RS, an SSB, a DL PRS or another SRS.

### Positioning techniques

NR positioning supports the following methods:
Methods already in LTE and enhanced in NR:
   - DL TDOA (downlink TDOA)
   - E-CID
   - RAT independent methods (based on non-3GPP sensors such as GPS, pressure sensors, Wifi signals, Bluetooth, etc).
   - UL TDOA (uplink TDOA)
Newly introduced methods in NR:
   - Multicell RTT: the LMF collects RTT (round trip time) measurement as the basis for multilateration
   - DL angle of departure (AoD) and UL angle of arrival (AoA), where multilateration is done using angle and power (RSRP) measurements

### Measurements:

In NR Rel. 16, the following UE measurements are specified:
- DL Reference Signal Time Difference (RSTD), allowing for e.g. DL TDOA positioning
- Multi cell UE Rx-Tx Time Difference measurement, allowing for multi cell RTT measurements
- DL PRS Reference Signal Receive Power (RSRP)

In NR Rel. 16, the following gNB measurements are specified:
- Uplink Relative Time of Arrival (UL-RTOA), useful for UL TDOA positioning
- gNB Rx-Tx time difference, useful for multi cell RTT measurements
- UL SRS-RSRP
- Angle of Arrival (AoA) and Zenith angle of Arrival (ZoA)

### Signal configurations:

In NR Release 16, the DL PRS is configured by each cell separately, and the location server (LMF) collects all configuration via the NRPPa protocol, before sending an assistance data (AD) message to the UE via the LPP protocol. In the uplink, the SRS signal is configured in RRC by the serving gNB, which in turn forwards appropriate SRS configuration parameters to the LMF upon request.

NR Release 16 DL PRS is organized in a 3-level hierarchy:
- PRS frequency layer: gathers PRS resource sets from (potentially) multiple base station, having common parameters in common. If two resource sets are in the same frequency layer, they:
   - Operate in the same band with the same subcarrier spacing
   - Have the same comb factor
   - Have the same starting PRB and bandwidth
- PRS Resource set: corresponds to a collection of PRS beams (resources) which are all originating from the same Transmission and reception point (TRP). All resource in the same set have the same comb factor
- PRS resource: correspond to a beam transmitting the PRS

Similar to LTE, in NR a unique reference signal is transmitted from each antenna port at the gNB for downlink channel estimation at a UE. Reference signals for downlink channel estimation are commonly referred to as channel state information reference signal (CSI-RS).

A CSI-RS signal is transmitted on a set of time-frequency resource elements (REs) associated with an antenna port. For channel estimation over a system bandwidth, CSI-RS is typically transmitted over the whole system bandwidth. The set of REs used for CSI-RS transmission is referred to as CSI-RS resource. From a UE point of view, an antenna port is equivalent to a CSI-RS that the UE shall use to measure the channel. Up to 32 (i.e. *Nₜₓ* = 32) antenna ports are supported in NR and thus 32 CSI-RS signals can be configured for a UE.

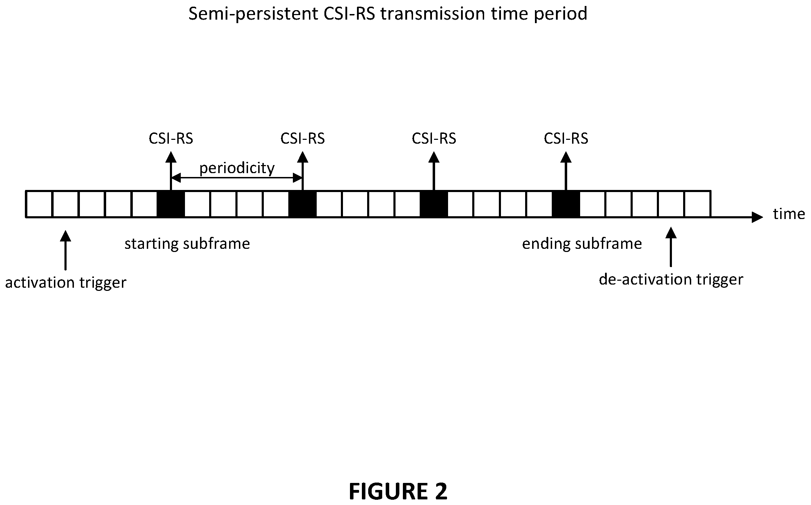

In NR, the following three types of CSI-RS transmissions are supported:
- Periodic CSI-RS Transmission: CSI-RS is transmitted periodically in certain subframes or slots. This CSI-RS transmission is semi-statically configured using parameters such as CSI-RS resource, periodicity and subframe or slot offset similar to LTE.
- Aperiodic CSI-RS Transmission: This is a one-shot CSI-RS transmission that can happen in any subframe or slot. Here, one-shot means that CSI-RS transmission only happens once per trigger. The CSI-RS resources (i.e., the resource element locations which consist of subcarrier locations and OFDM symbol locations) for aperiodic CSI-RS are semi-statically configured. The transmission of aperiodic CSI-RS is triggered by dynamic signaling through PDCCH. The triggering may also include selecting a CSI-RS resource from multiple CSI-RS resources.
- Semi-Persistent CSI-RS (SP CSI-RS) Transmission: Similar to periodic CSI-RS, resources for semi-persistent CSI-RS transmissions are semi-statically configured with parameters such as periodicity and subframe or slot offset. However, unlike periodic CSI-RS, dynamic signaling is needed to activate and possibly deactivate the CSI-RS transmission. An example is shown in Figure 2. In NR, activation and deactivation is performed using MAC CE signaling.

### Multiple transmission/reception points (TRP)

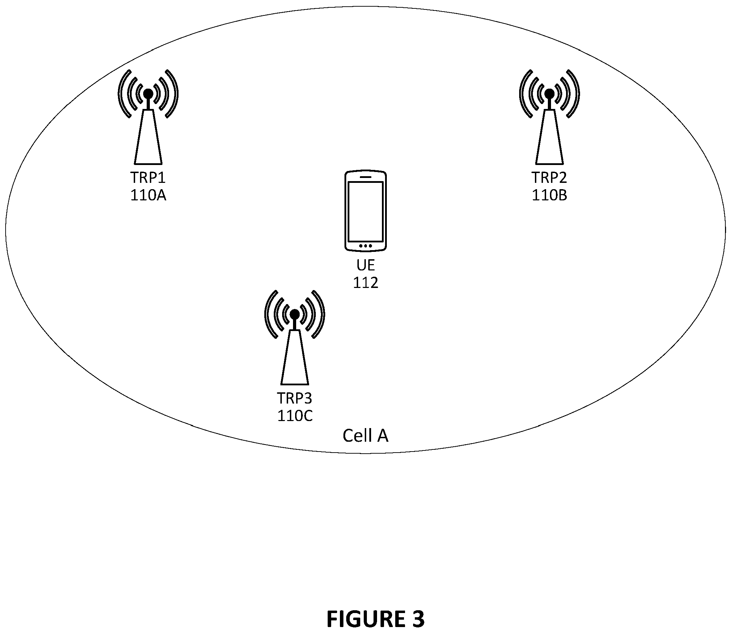

A cell can consist of multiple TRPs with each TRP located in distinct coordinates, an example of which is shown in Figure 3. This sort of configuration is expected to be used in I-IOT scenarios. As an example, one cell with 10, 20 or even more TRPs may be used to cover a complete factory hall.

For positioning, as such, three distinct co-ordinates are required to perform multilateration. With this sort of scenario where a serving cell has multiple TRPs located in distinct co-ordinates, it should be possible to exploit this for positioning.

### Gapless PRS measurement

In NR release 16, the PRS-based measurements (including PRS RSRP, RSTD for OTDOA and UE Rx-Tx for RTT) are all made in the presence of measurement gaps. During a measurement gap, the UE can expect that the network will not transmit any data and thus the UE can tune itself specifically to measure the PRS. For example, to measure PRS (i.e., DL PRS), the UE will potentially utilize a different bandwidth than the active bandwidth part it is configured with to receive data.

In NR release 17, it has been agreed to specify enhancements to enable measuring the DL PRS without the need for measurement gaps. If the bandwidth part of the UE is wide enough to cover the DL PRS bandwidth, the UE can measure the PRS without requesting measurement gaps. In the RAN1#106-e meeting, it was agreed that when a downlink channel or another downlink reference signal with higher priority collides with DL PRS measurement/processing, then the UE can drop the DL PRS measurement/processing.

### Scheduled location time T

In NR release 16, the positioning procedures are triggered by location request or deferred location request associated with specific events associated with the target UE, i.e., UE availability, area, periodic location, and motion. The positioning measurements are triggered when the UE receives LPP request location information, and/or the gNB receives NRPPa measurement request, and the measurements are carried out as soon as the positioning resources are available and measurement gap are configured (if required for DL positioning methods).

In NR release 17, it has been agreed to enable positioning measurements at a scheduled location time T, which is a further time specified by an external LCS Client, AF or the UE. In RAN procedures, T can be interpreted as a measurement window around T (configured by LMF) based on QoS requirement(s) and available PRS resource(s). When a UE and/or gNB receive a measurement window, they are supposed to perform DL and/or UL measurements with the positioning signals inside that measurement window.

Document "TP to NRPPa BL CR: Addition of On-demand DL-PRS information", Ericsson, 3GPP R3-213854 pertains to support of on-demand DL PRS. The following observations and proposals were made. Proposal 1: The endorsed PRS Configuration Exchange procedure is used for both LMF (network)-initiated and UE-initiated DL PRS transmission. Proposal 2: the LMF determines a number of PRS configurations, based on a crowdsourcing approach from e.g. different UE LPP measurements reports. The LMF can ask the gNB to set-up or update the PRS transmission with an index to a pre-determined configuration. Observation 1: It is beneficial if the LMF asks the gNB to modify the configuration of an on-going DL PRS transmission. Observation 2: Since RAN3 has defined the PRS Configuration Exchange as class1 procedure it is possible for the gNB to ACK the configuration index, if successful. Proposal 3: Since we do not exchange RAN capabilities over RAN3 interfaces, we can rely on OAM or proprietary signalling during dedicated deployments.

Document "Remaining issues on physical layer procedure for NR positioning", vivo, 3GPP draft R1-2005358 may be construed to disclose and evaluation of on remaining issues on physical-layer procedures for Rel-16 NR positioning. Inter alia, the following proposals were made. Observation 1: The definition of positioning frequency layer in NR is not the same as in LTE. Observation 2: Such network indicated priority of positioning layer may restrict UE's ability to measure different positioning frequency layer. Proposal 1: Positioning frequency layers in NR are not sorted according to priority. Proposal 2: LMF recommends some PRS resources in high priority to measure while the actual PRS resources to be measured is still decided by the UE. Proposal 3: When a UE is configured in the assistance data of a positioning method with a number of PRS resources beyond its capability (FG 13-2,13-3,13-4 for AoD, TDOA, MRTT respectively), the UE assumes the DL-PRS Resources in the assistance data are sorted in a decreasing order of measurement priority. Specifically, according to the current RAN2 structure of the assistance data, the following priority is assumed: The resources of the set are divided into M measurement groups. The priority of measurement groups of a PRS resource set are sorted according to the priority order of PRS resource set first, then by the order of TRP, at last followed by the next measurement group of the same PRS resource set. Proposal 4: The sorted PRS resource priority is assumed only within the measurement gap window on the UE side.

### SUMMARY

It is an object of the present disclosure to obviate or mitigate at least one disadvantage of the prior art.

There are provided systems and methods for configuring periodization of PRS measurements. According to the present disclosure, there are provided methods, computer-readable media, a gNB and an LMF/gNB-CU according to the independent claims. Further developments are set forth in the dependent claims.

In a first aspect there is provided a method performed by an access node. The access node comprises a radio interface and processing circuitry and be configured to receive, from a network node, a configuration request to configure a positioning reference signal (PRS) measurement window for a wireless device. The access node determines whether to configure the PRS measurement window in accordance with a priority associated with the PRS measurement. Responsive to configuring the PRS measurement window in accordance with the priority, the access nodes transmits a configuration response to the network node; and/or responsive to not configuring the PRS measurement window in accordance with the priority, the access node transmits a configuration failure to the network node.

In some embodiments, the access node can determine a priority between data reception and PRS measurement.

In some embodiments, the access node can transmit, to the wireless device, configuration information associated with the PRS measurement window. In some embodiments, the access node can transmit, to the wireless device, an indication of the priority associated with the PRS measurement. In some embodiments, the access node can receive, from the wireless device, an indication that a PRS measurement has been skipped in accordance with the priority.

In another aspect there is provided a method performed by a network node. The network node comprises a radio interface and processing circuitry and be configured to generate configuration information associated with a positioning reference signal (PRS) measurement window. The network node transmits, to an access node, a configuration request to configure the positioning reference signal (PRS) measurement window for a wireless device. The access node receives, from the access node, at least one of: a configuration response indicating that the PRS measurement window has been successfully configured and/or a configuration failure indicating that the PRS measurement window has not been configured.

The network node is a Location Management Function (LMF) or a gNB Control Unit (gNB-CU).

Moreover, the network node receives, from the wireless device, an indication that a PRS measurement has been skipped in accordance with the priority.

In some embodiments, the configuration request includes an indication of the priority associated with the PRS measurement.

In some embodiments, at least one of the configuration request, the configuration response, and the configuration failure messages can be transmitted and/or received via NRPPa signaling.

In some embodiments, at least one of the configuration request, the configuration response, and the configuration failure messages can be transmitted and/or received via F1AP signaling.

In some embodiments, the configuration response indicates that the PRS measurement window has been successfully configured by the access node.

In some embodiments, the configuration failure indicates that the PRS measurement window has not been configured by the access node.

The various aspects and embodiments described herein can be combined alternatively, optionally and/or in addition to one another.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures, wherein:
Figure 1 illustrates an example of NR positioning architecture;
Figure 2 illustrates an example of Semi-Persistent CSI-RS transmission;
Figure 3 illustrates an example of multi-TRP in a cell;
Figure 4 is an example communication system;
Figure 5 is a signaling diagram of a first example embodiment;
Figure 6 is a signaling diagram of a second example embodiment;
Figure 7 is a flow chart illustrating a method which can be performed in a wireless device;
Figure 8 is a flow chart illustrating a method which can be performed in an access node;
Figure 9 is a flow chart illustrating a method which can be performed in a network node;
Figure 10 is a block diagram of an example wireless device;
Figure 11 is a block diagram of an example network node;
Figure 12 is a block diagram of an example host;
Figure 13 is a block diagram illustrating an example virtualization environment; and
Figure 14 is a communication diagram of a host communicating via a network node with a UE.

### DETAILED DESCRIPTION

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

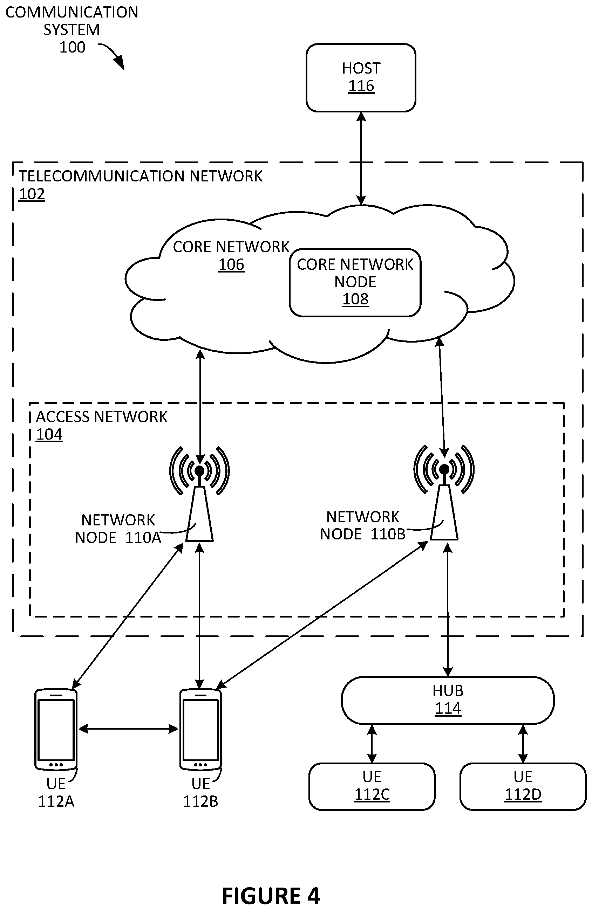

Figure 4 illustrates an example of a communication system 100 in accordance with some embodiments.

In the example, the communication system 100 includes a telecommunication network 102 that includes an access network 104, such as a radio access network (RAN), and a core network 106, which includes one or more core network nodes 108. The access network 104 includes one or more access network nodes, such as network nodes 110A and 110B (one or more of which may be generally referred to as network nodes 110), or any other similar 3rd Generation Partnership Project (3GPP) access node or non-3GPP access point. The network nodes 110 facilitate direct or indirect connection of user equipment (UE), such as by connecting UEs 112A, 112B, 112C, and 112D (one or more of which may be generally referred to as UEs 112) to the core network 106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 100 may include any number of wired or wireless networks, network nodes, UEs, and/or any other components or systems that may facilitate or participate in the communication of data and/or signals whether via wired or wireless connections. The communication system 100 may include and/or interface with any type of communication, telecommunication, data, cellular, radio network, and/or other similar type of system.

The UEs 112 may be any of a wide variety of communication devices, including wireless devices arranged, configured, and/or operable to communicate wirelessly with the network nodes 110 and other communication devices. Similarly, the network nodes 110 are arranged, capable, configured, and/or operable to communicate directly or indirectly with the UEs 112 and/or with other network nodes or equipment in the telecommunication network 102 to enable and/or provide network access, such as wireless network access, and/or to perform other functions, such as administration in the telecommunication network 102.

In the depicted example, the core network 106 connects the network nodes 110 to one or more hosts, such as host 116. These connections may be direct or indirect via one or more intermediary networks or devices. In other examples, network nodes may be directly coupled to hosts. The core network 106 includes one or more core network nodes (e.g. core network node 108) that are structured with hardware and software components. Features of these components may be substantially similar to those described with respect to the UEs, network nodes, and/or hosts, such that the descriptions thereof are generally applicable to the corresponding components of the core network node 108. Example core network nodes include functions of one or more of a Mobile Switching Center (MSC), Mobility Management Entity (MME), Home Subscriber Server (HSS), Location Management Function (LMF), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 116 may be under the ownership or control of a service provider other than an operator or provider of the access network 104 and/or the telecommunication network 102, and may be operated by the service provider or on behalf of the service provider. The host 116 may host a variety of applications to provide one or more service. Examples of such applications include live and prerecorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 100 of Figure 4 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g. 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 102 is a cellular network that implements 3GPP standardized features. Accordingly, the telecommunications network 102 may support network slicing to provide different logical networks to different devices that are connected to the telecommunication network 102. For example, the telecommunications network 102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 112 are configured to transmit and/or receive information without direct human interaction. For instance, a UE may be designed to transmit information to the access network 104 on a predetermined schedule, when triggered by an internal or external event, or in response to requests from the access network 104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 114 communicates with the access network 104 to facilitate indirect communication between one or more UEs (e.g. UE 112C and/or 112D) and network nodes (e.g. network node 110B). In some examples, the hub 114 may be a controller, router, content source and analytics, or any of the other communication devices described herein regarding UEs. For example, the hub 114 may be a broadband router enabling access to the core network 106 for the UEs. As another example, the hub 114 may be a controller that sends commands or instructions to one or more actuators in the UEs. Commands or instructions may be received from the UEs, network nodes 110, or by executable code, script, process, or other instructions in the hub 114. As another example, the hub 114 may be a data collector that acts as temporary storage for UE data and, in some embodiments, may perform analysis or other processing of the data. As another example, the hub 114 may be a content source. For example, for a UE that is a VR headset, display, loudspeaker or other media delivery device, the hub 114 may retrieve VR assets, video, audio, or other media or data related to sensory information via a network node, which the hub 114 then provides to the UE either directly, after performing local processing, and/or after adding additional local content. In still another example, the hub 114 acts as a proxy server or orchestrator for the UEs, in particular in if one or more of the UEs are low energy IoT devices.

The hub 114 may have a constant/persistent or intermittent connection to the network node 110B. The hub 114 may also allow for a different communication scheme and/or schedule between the hub 114 and UEs (e.g. UE 112C and/or 112D), and between the hub 114 and the core network 106. In other examples, the hub 114 is connected to the core network 106 and/or one or more UEs via a wired connection. Moreover, the hub 114 may be configured to connect to an M2M service provider over the access network 104 and/or to another UE over a direct connection. In some scenarios, UEs may establish a wireless connection with the network nodes 110 while still connected via the hub 114 via a wired or wireless connection. In some embodiments, the hub 114 may be a dedicated hub - that is, a hub whose primary function is to route communications to/from the UEs from/to the network node 110B. In other embodiments, the hub 114 may be a non-dedicated hub - that is, a device which is capable of operating to route communications between the UEs and network node 110B, but which is additionally capable of operating as a communication start and/or end point for certain data channels.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell". However, particularly with respect to 5G/NR concepts, beams may be used instead of cells and, as such, it is important to note that the concepts described herein are equally applicable to both cells and beams.

Returning to the discussion of conventional PRS-based measurements made with measurement gaps, in NR Release 17, it was agreed to specify enhancements to enable measuring the DL PRS without the need for measurement gaps. If the bandwidth part (BWP) of the UE is wide enough to cover the DL PRS bandwidth, the UE can measure the PRS without requesting measurement gap(s). However, collision with the data channels and other downlink reference signals may be an issue to be addressed.

Even though it is agreed that the UE can drop the DL PRS measurement/processing when the DL PRS collides with a DL channel and/or another DL reference signal with higher priority, the UE procedure for the case when such dropping happens is not known. Hence, what procedures a UE performs when a DL PRS measurement/processing is about to be dropped due to DL PRS collision with a DL channel or another DL reference signal with higher priority remains to be solved. It should be noted that the entity which may decide to prioritize the radio resource for certain specific usage may not have all the necessary information. How to configure positioning related priority in radio node remains an issue. Configuration and signaling details of DL PRS priority across different NW entities are currently not known. Hence, how to configure the UE with DL PRS priorities and associated signaling is another open issue to be addressed.

Some embodiments described herein are directed towards the configuration and/or indication of priority of DL PRS to the UE with respect to other colliding DL channels/reference signals; handshaking messages between LMF and serving gNB on the priority of DL PRS; UE procedures when the measurement/processing of DL PRS is dropped due to collision with a DL channel/other DL reference signal with higher priority; and solutions for prioritizing positioning measurement with the use of different windows (measurement gap and positioning measurement window).

In some embodiments, methods to configure positioning measurements priority over other downlink channel reception or other downlink reference signal receptions/measurements are specified. How a gNB considers different input(s) from other network entities or UE(s) to make an informed decision will be described.

In some embodiments, methods have been proposed such that UE understands whether it should prioritize positioning measurements or reception of data.

In some embodiments, methods which facilitate in minimizing the need for asking for measurement gaps to the network from the UE have been provided.

In some embodiments, methods have been proposed such that UE informs the LMF that a measurement/processing of PRS is skipped/dropped due to collision with a DL channel/DL reference signal with higher priority.

In some embodiments, methods for prioritizing positioning measurement with the use of different windows (measurement gap and positioning measurement window) have been specified.

In one embodiment, the LMF can signal a configuration of DL PRS resources with different priorities to the UE via the LPP protocol. For instance, a priority indicator can be included as part of PRS configuration with different values of the priority indicator indicating different priorities (e.g. a priority indicator value of 0 indicating a lower priority DL PRS, and a priority indicator value of 1 indicating a higher priority DL PRS). For example, the priority indicator can be configured as part of the NR-DL-PRS-Info information element (IE) as defined in 3GPP TS 37.355 V16.5.0.

The priority indicator sent by the LMF to the UE for each PRS resource can be used to relay what the gNB scheduler has decided. In one embodiment, the gNB can include the priority indicator in the NR Positioning Protocol A (NRPPa) message used to transmit the PRS configuration(s) to the LMF. In another embodiment, the LMF may request, also via NRPPa, the gNB to provide (if the gNB initially did not provide a priority indication of PRS resource(s) explicitly) a specific priority for a given PRS. The gNB can then responds to the LMF with a request denied/granted message related to the request for providing PRS priority.

In some cases, the priority indication can consist of two or more priority levels, and two of these levels can be associated with a timer. When the priority is indicated to the LMF, one priority level is initially used (for example, PRS is set to be of highest priority over data). When the timer expires, the LMF is expected to change the PRS priority to the second associated level (for example, PRS is deprioritized over data).

In some cases, the priority indicator can be configured at the DL PRS resource set level (e.g. as part of NR-DL-PRS-ResourceSet-r16 as defined in the NR-DL-PRS-Info IE of 3GPP TS 37.355 V16.5.0) which means that the priority indicated by the priority indicator applies to all of the DL PRS resources in that DL PRS resource set.

In another case, the priority indicator can be configured at the DL PRS resource level (e.g. as part of NR-DL-PRS-Resource-r16 as defined in the NR-DL-PRS-Info IE of 3GPP TS 37.355 V16.5.0). In this case, it is possible to configure different DL PRS resources in a given DL PRS resource set with different priorities (e.g. DL PRS resource 1 of a DL PRS resource set configured with higher priority and DL PRS resource 2 of the DL PRS resource set configured with lower priority).

It should be noted that the priorities of DL PRS discussed above are with respect to DL channels and/or other DL reference signals that may collide with the DL PRS measurement/processing. In one example, a DL PRS with a "higher priority" indicator configured means that the DL PRS shall be measured/processed by the UE over DL channels and/or other DL reference signals that may collide with the DL PRS measurement/processing. A DL PRS with a "lower priority" indicator configured means that the DL PRS measurement/processing shall be dropped (or in other words skipped) by the UE in which case the UE shall prioritize the measurement/reception/decoding of DL channels and/or other DL reference signals that may collide with the DL PRS.

In another embodiment, whether a DL PRS shall be measured/processed or dropped by the UE can depend on both the priority indicated for the DL PRS and a priority indicated for the colliding DL channels and/or other DL reference signals. Note that the priority indicated for the colliding DL channels and/or other DL reference signals may be indicated to the UE from the serving gNB. For instance, this embodiment may cover the following examples:
Example 1: A high priority is indicated for a colliding PDSCH (physical downlink shared channel) and a high priority is indicated for DL PRS. Then, the UE shall drop the high priority DL PRS with which the high priority PDSCH collides. Alternatively, the UE can measure/process the high priority DL PRS over the colliding high priority PDSCH.
Example 2: A high priority is indicated for a colliding PDSCH (physical downlink shared channel) and a low priority is indicated for DL PRS. Then, the UE shall drop the low priority DL PRS with which the high priority PDSCH collides.
Example 3: A low priority is indicated for a colliding PDSCH (physical downlink shared channel) and a low priority is indicated for DL PRS. Then, the UE shall drop the low priority DL PRS with which the low priority PDSCH collides. Alternatively, the UE can measure/process the low priority DL PRS over the colliding low priority PDSCH.

It is noted that even though a colliding PDSCH is used in the above examples, this embodiment is not limited to only PDSCH and is applicable to any other colliding DL channels and/or DL reference signals.

In some embodiments, at least three levels of priority can be configured for DL PRS (e.g. higher priority, medium priority, lower priority). In one example, a DL PRS with a higher priority indicator configured means that the DL PRS shall be measured/processed by the UE over DL channels and/or other DL reference signals that may collide with the DL PRS measurement/processing. A DL PRS with a lower priority indicator configured means that the DL PRS measurement/processing shall be dropped (or in other words skipped) by the UE in which case the UE shall prioritize the measurement/reception/decoding of DL channels and/or other DL reference signals that may collide with the DL PRS. In one example, a DL PRS with a medium priority indicator configured means that the UE shall perform the following:
- the DL PRS shall be measured/processed by the UE over other DL reference signals that may collide with the DL PRS measurement/processing;
- the DL PRS measurement/processing shall be dropped (or in other words skipped) by the UE in which case the UE shall prioritize the measurement/reception/decoding of DL channels that may collide with the DL PRS.

The above embodiment may be generalized to *N* levels of priority for DL PRS, where each level of priority can apply to a subset of the DL channels and/or other DL reference signals.

It is noted that collisions between DL channels and/or other DL reference signals with DL PRS measurement/processing in this disclosure may be defined as any one of the following:
- The time domain symbols (e.g. OFDM symbols) allocated for the DL channels and/or other DL reference signals overlap with the time domain symbols (e.g., OFDM symbols) allocated for DL PRS.
- The time domain symbols (e.g. OFDM symbols) allocated for the DL channels and/or other DL reference signals overlap with all the time domain symbols in a window configured for the UE to perform DL PRS measurement/processing. Note that the window configured may contain one or more time domain symbols. Note that the time domain symbols in the configured window may be larger than the time domain symbols allocated for DL PRS.
- The time domain symbols (e.g. OFDM symbols) allocated for the DL channels and/or other DL reference signals overlap with a subset of the time domain symbols in a window configured for the UE to perform DL PRS measurement/processing. Note that the window configured may contain one or more time domain symbols. Note that the time domain symbols in the configured window may be larger than the time domain symbols allocated for DL PRS. In some cases, the subset of the time domain symbols are the time domain symbols allocated for DL PRS.

The DL channels in the above embodiments may include, but are not limited to, one or more of: PDCCH, dynamically scheduled PDSCH (PDSCH with dynamic grant scheduled via a DL DCI scrambled with C-RNTI), and semi-persistently scheduled (SPS) PDSCH (downlink semi-persistent transmission configured by the SPS-Config information element in 3GPP TS 38.331 V16.4.1).

The other DL reference signals in the above embodiments may include, but are not limited to, one or more of: periodic NZP CSI-RS, aperiodic NZP CSI-RS, semi-persistent NZP CSI-RS, periodic TRS and aperiodic TRS as defined in 3GPP TS 38.214 and 3GPP TS 38.211.

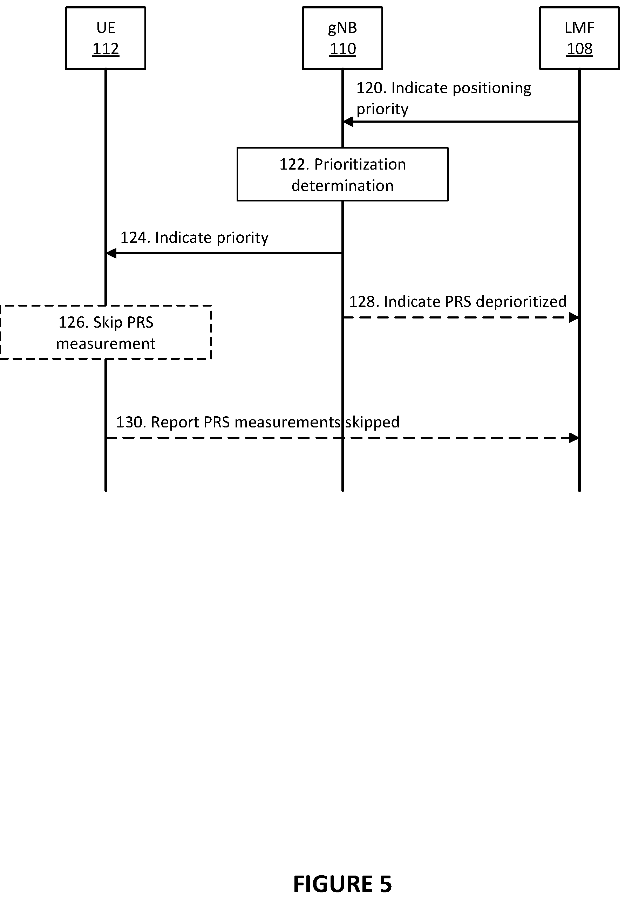

Figure 5 is a signaling diagram illustrating an example embodiment where the LMF 108 indicates the configured priority of one or more DL PRS resources to the serving gNB 110 via NRPPa.

Step 120: LMF 108 indicates the priority of Positioning session to gNB 110 via NRPPa signaling based on, for example, quality of service requirements for positioning. The priority can also include the type of positioning session such as regulatory or commercial, for example, or some requirements in terms of ascending or descending order with some number indexing (e.g. 1 to 5). In one embodiment, the signaling of this prioritization information can be achieved via incorporating the priority information in existing NRPPa messages defined in Rel-16 version of TS 38.455. In another embodiment, the signaling can be done by enhancing the PRS Configuration Exchange procedure defined in rel-17 version of TS 38.455. An example is provided below:

### 9.1.1.a1 PRS CONFIGURATION REQUEST

This message is sent by LMF to request NG-RAN node configuring the PRS transmission.

### Direction: LMF → NG-RAN node.

| **IE/Group Name** | | | **Presence** | **Range** | **IE type and reference** | **Semantics description** | **Criticality** | **Assigned Criticality** |
|---|---|---|---|---|---|---|---|---|
| Message Type | | | M | | 9.2.3 | | YES | reject |
| NRPPa Transaction ID | | | M | | 9.2.4 | | - | |
| **PRS TRP List** | | | | [FFS] | | | YES | ignore |
| | **>PRS TRP Item** | | | *1.*. *<maxnoT RPs>* | | | EACH | ignore |
| | | >>TRP ID | M | | 9.2.24 | | - | |
| | | >>Requested DL PRS Transmission Characteristics | [FFS] | | 9.2.x1 | | YES | ignore |

| **Range bound** | **Explanation** |
|---|---|
| maxnoTRPs | Maximum no. of TRPs in a NG-RAN node. Value is 65535 |

### 9.2.x1 Requested DL PRS Transmission Characteristics

This IE contains the requested PRS configuration for transmission by the LMF.

| **IE/Group Name** | **Presence** | **Range** | **IE Type and Reference** | **Semantics Description** |
|---|---|---|---|---|
| DL PRS Prioritization | O | | Enumerated (prioritized, deprioritized,...) | |
| | | | | |
| | | | | |
| | | | | |

In another embodiment, the prioritization can be signaled using one or more new NRPPa messages or can be left to OAM.

Step 122: The gNB 110 can use this input to determine what shall be prioritized; whether data (i.e. either dynamically scheduled PDSCH or SPS PDSCH) or any other reference signal over PRS; or whether PRS is prioritized over data channels and reference signal.

Step 124: The gNB 110 indicates the priority using an existing field in DCI, an existing field in DCI with one or more codepoints in the field reinterpreted for priority indication, a new field in DCI, a new DCI format, or using MAC control element. The serving gNB 110 may also indicate to the UE 112 to drop PRS with associated priority above certain number (for example above 3; where priority 3 and above may be associated to low priority PRS configurations).

Step 126: In the case where gNB 110 prioritizes data or any other reference signal over PRS (i.e. if PRS is not transmitted or UE is asked not to perform PRS measurement but to obtain DL data), the UE 112 can skip the PRS measurements in accordance with the prioritization.

In the alternative case, where gNB 110 prioritizes PRS over other data or reference signal(s), the UE 112 can perform the PRS measurements in accordance with the prioritization.

Step 128: gNB 110 indicates the decision to LMF 108 using NRPPa. In one embodiment, the response of the gNB's decision related to PRS prioritization can be included in one of the existing NRPPa response messages defined in Rel-16 version of TS 38.455. In another embodiment, the signaling can be done by enhancing the PRS Configuration Exchange procedure defined in rel-17 version of TS 38.455. An example provided below:

### 9.1.1.a2 PRS CONFIGURATION RESPONSE

This message is sent by NG-RAN node to acknowledge configuring/updating the PRS transmission.

### Direction: NG-RAN node → LMF.

| **IE/Group Name** | | | **Presence** | **Range** | **IE type and reference** | **Semantics description** | **Criticality** | **Assigned Criticality** |
|---|---|---|---|---|---|---|---|---|
| Message Type | | | M | | 9.2.3 | | YES | reject |
| NRPPa Transaction ID | | | M | | 9.2.4 | | - | |
| **PRS Transmission TRP List** | | | | [FFS] | | | YES | ignore |
| | **>PRS Transmission TRP Item** | | | *1.. <maxnoT RPs>* | | | EACH | ignore |
| | | >>TRP ID | M | | 9.2.24 | | - | |
| | | >>On-demand PRS information | [FFS] | | 9.2.x2 | | YES | ignore |
| | | >> DL Data | O | | Enumerated (true,...) | This IE indicate that the PRS transmission has been skipped, or that it has been used to obtain DL data by the UE | | |

| **Range bound** | **Explanation** |
|---|---|
| maxnoTRPs | Maximum no. of TRPs in a NG-RAN node. Value is 65535 |

In an alternative embodiment, the signaling can be done via the PRS configuration failure message as shown below:

### 9.1.1.a3 PRS CONFIGURATION FAILURE

This message is sent by NG-RAN node to indicate that it cannot configure the PRS transmission.

### Direction: NG-RAN node → LMF.

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3 | | YES | reject |
| NRPPa Transaction ID | M | | 9.2.4 | | - | |
| Cause | M | | 9.2.1 | | YES | ignore |
| Criticality Diagnostics | O | | 9.2.2 | | YES | ignore |
| DL Data | O | | Enumerated (true,...) | This IE indicates that the PRS transmission has been skipped, or that it has been used to obtain DL data by the UE | | |

In another embodiment, the indication can be signaled using one or more new NRPPa messages or can be left to OAM.

Step 130: The UE can inform the LMF using LPP that the PRS was dropped/skipped. In some embodiments, the signaling can be included as an error. An example is provided below, including indications of no PRS detected and/or PRS measurement skipped:

### 6.2.1.1 - NR-DL-TDOA-TargetDeviceErrorCauses

The IE *NR-DL-TDOA-TargetDeviceErrorCauses* is used by the target device to provide NR DL-TDOA error reasons to the location server.

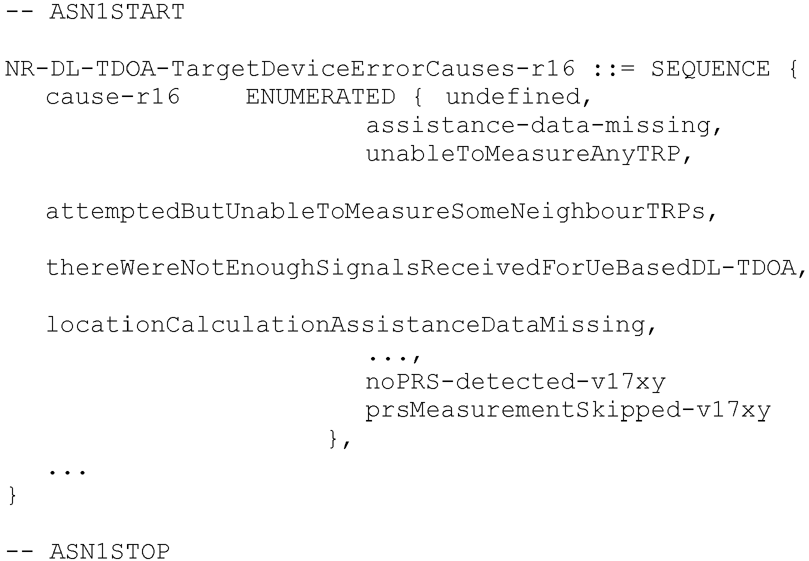

In some embodiments, the signaling can be more explicit, including indication of the deprioritized PRS measurement(s), as in the following example:

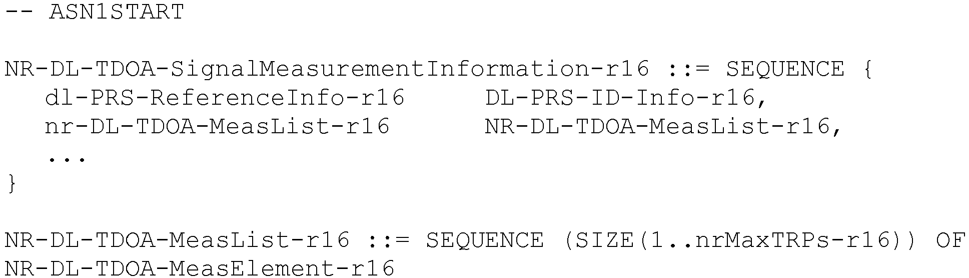

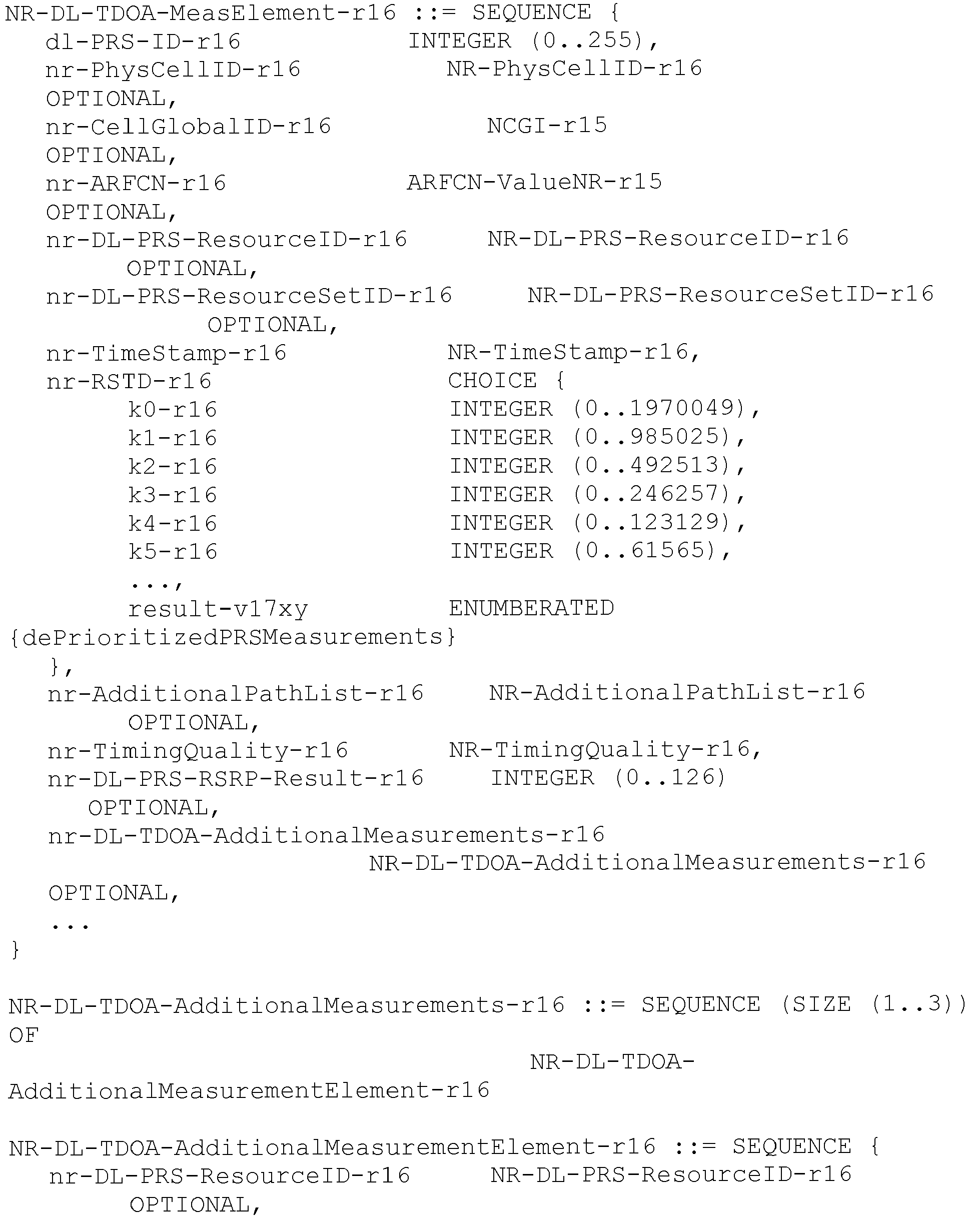

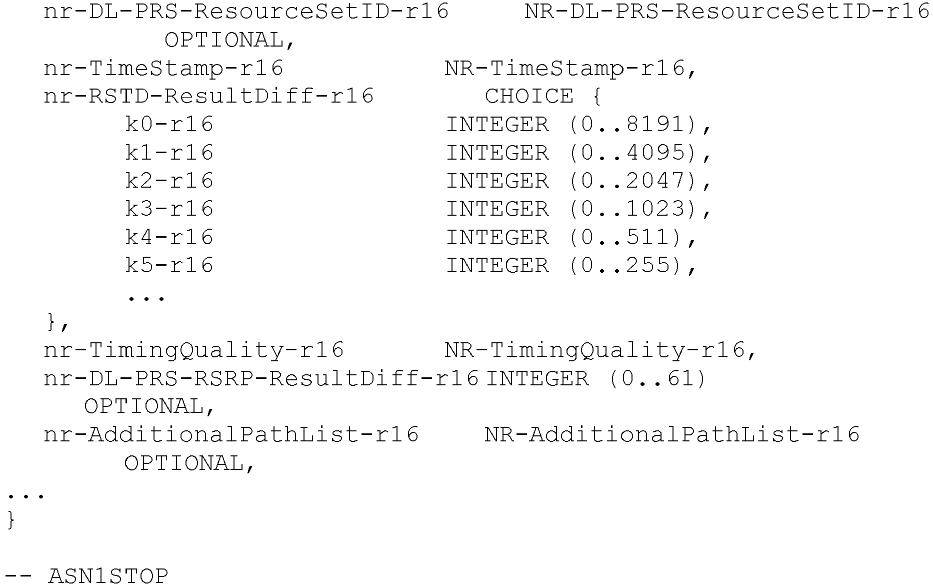

In some embodiments, supplementary information can be signaled over the F1 interface in split-gNB scenario, between a gNB-CU and a gNB-DU, such as signaling new indications over F1AP messages that would be equivalent to the NRPPa messages described in step 120 and step 128 of Figure 5.

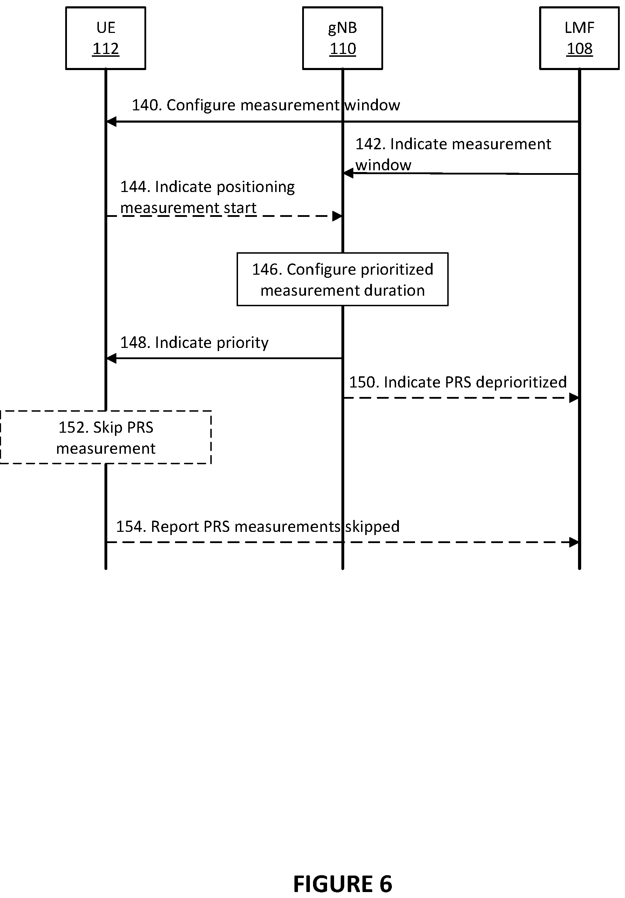

Figure 6 is a signaling diagram illustrating an example embodiment related to an overlapping window.
Step 140: The LMF 108 configures a measurement window. This window can be based upon scheduled location time T.
Step 142: LMF 108 indicates the start time of the measurement window and the end time of the measurement window to gNB 110.
Step 144: In some embodiments, the UE 108 can indicate the need to start positioning measurements.
Step 146: The gNB 110 configures the measurement duration with a prioritized window where the prioritized window is based at least in part on the window length of the configured measurement window (e.g. in accordance with the start and end period). The gNB 110 may determine and indicate to drop PRS measurement(s) which are occurring outside of such window.
Step 148: gNB 110 provides such indication of priority based on the measurement window and instruction to the UE 112
Step 150: gNB 110 can also inform the LMF 108 of the PRS deprioritization via NRPPa
Step 152: The UE 112, based upon gNB 110 instruction, can skip PRS measurements occurring outside of such measurement window provided by LMF 108. Alternatively, the UE 112 configures the measurement window as requested.
Step 154: The UE 112 reports to LMF 108 using LPP that the PRS was dropped/skipped.

In some other embodiments, the gNB may indicate the configured priority of one or more DL PRS resources to its gNB-DU(s) over F1 interface.

In some other embodiments, the serving gNB may exchange the configured priority of one or more DL PRS resources with its neighbour nodes over Xn interface.

In an alternative embodiment, multiple one-bit DL PRS priority indicators are used to indicate the priority of the DL PRS over other signals and channels. Each one-bit DL PRS priority indicator indicates the DL PRS priority relative to one specific signal or channel, or alternatively to a set of signals and/or channels. As an example, a one-bit DL PRS priority indicator could be defined so that a bit is set to one would indicate that the DL PRS is prioritized while a bit set to zero would indicate that the specific signal or channel, or set of signals and/or channels would be prioritized.

In one embodiment, the one-bit DL PRS priority indicators would be signaled as a bit-string where each bit would correspond to one priority indicator, defining the priority for a specific predefined signal or channel, or set of signals and/or channels.

To give some examples a one-bit DL PRS priority indicator could define the DL PRS priority relative to one of the following signal or channels or sets of signals or channels, or relative to a subset of these:
- PDCCH
- Coreset 0 of PDCCH
- Coresets other than coreset 0 of PDCCH
- A specific coreset of PDCCH
- All CSI-RS configured for the UE
- A specific CSI-RS resource set configured for the UE
- A subset of the CSI-RS resource sets configured for the UE
- A specific CSI-RS resource configured for the UE
- A subset of the CSI-RS resources configured for the UE
- PDSCH
- dynamically scheduled PDSCH
- SPS PDSCH

In one embodiment, the one-bit DL PRS priority indicators are signaled to the UE by the LMF over LPP.

In one embodiment, the one-bit DL PRS priority indicators are signaled to the UE by the gNB over RRC.

In one embodiment, one or more of the one-bit DL PRS priority indicators are signaled to the UE by the gNB as part of the configuration of the signal or channel to which the DL PRS priority indicator applies. As an example, a one-bit DL PRS priority indicator would be included in the CSI-RS configuration to define prioritization between a specific CSI-RS and DL PRSs.

It is noted that in NR, PDCCH coresets can be located anywhere in a slot. This is useful to reduce latency, e.g. for URLLC. However, with multiple coresets in each slot there may be too little space remaining to fit a DL PRS and to allow UE processing of the DL PRS. To balance latency requirements versus positioning requirements one solution is allow different prioritization for different coresets as described above.

Some of the mechanisms described herein allow the UE to prioritize data channels, control channels, other downlink reference signals and/or positioning measurements. If there any issues in handling both, the network can provide a priority so that UE knows what to prioritize and what to drop. Some embodiments can provide lower positioning latency and even further improved accuracy by focusing on prioritized positioning resources for measurements. The gNB is able to provide efficient prioritization of data/control channels (for instance urgent URLLC data/instructions) and positioning measurements.

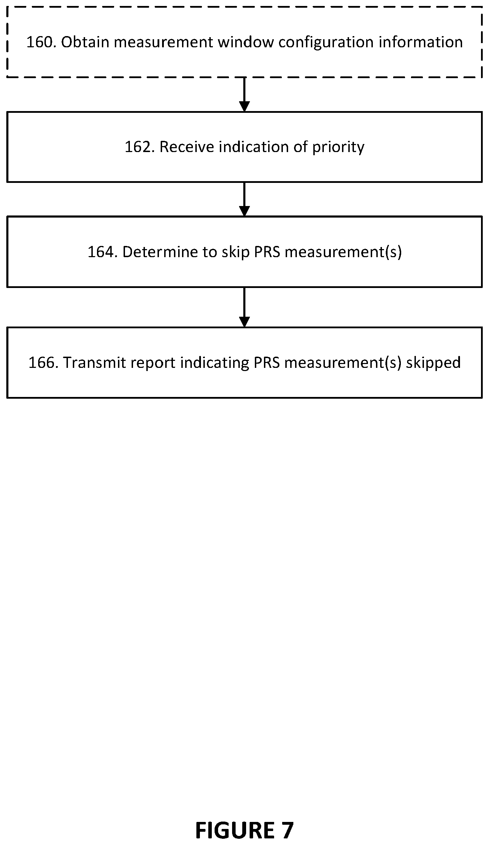

Figure 7 is a flow chart illustrating a method which can be performed in a wireless device, such as a UE 112 as described herein. The method can include:
Step 160: Optionally, the wireless device obtains measurement window configuration information. The configuration information can be received from an access node and/or a network node. In some embodiments, this includes receiving a configuration message (e.g. a LPP message) from a network node, such as LMF 108. The configuration information can include parameters (e.g. start time, end time) associated with a measurement window for performing PRS measurements.

The wireless device can receive further configuration information including at least one resource for measuring one or more reference signal(s) (e.g. PRS) and for deriving positioning measurements. The configuration parameters can include a periodicity, an offset, a starting PRB, a bandwidth, an ending PRB, a starting symbol, a number of consecutive symbols, an end symbol, and/or other configuration parameters defining the position in frequency, time, and/or bandwidth of the reserved resource.

Step 162: The wireless device can receive an indication of priority associated with one or more PRS measurement(s). The indication can be received from an access node, such as gNB 110. The indication can be included in a DCI message received from the access node. In some embodiments, the indication can indicate for the wireless device to prioritize data or other reference signal(s) over PRS.

Step 164: The wireless device can determine to skip one or more PRS measurement(s) in accordance with the indication of priority.

Step 166: Optionally, the wireless device can transmit, to the access node or the network node, a report indicating that the PRS measurement(s) were skipped or not performed.

It will be appreciated that in some embodiments, the wireless device can communicate (e.g. transmit/receive messages) directly with a network node such as location server 108. In other embodiments, messages and signals between the entities may be communicated via other nodes, such as radio access node (e.g. gNB, eNB) 110.

It will be appreciated that one or more of the above steps can be performed simultaneously and/or in a different order. Also, steps illustrated in dashed lines are optional and can be omitted in some embodiments.

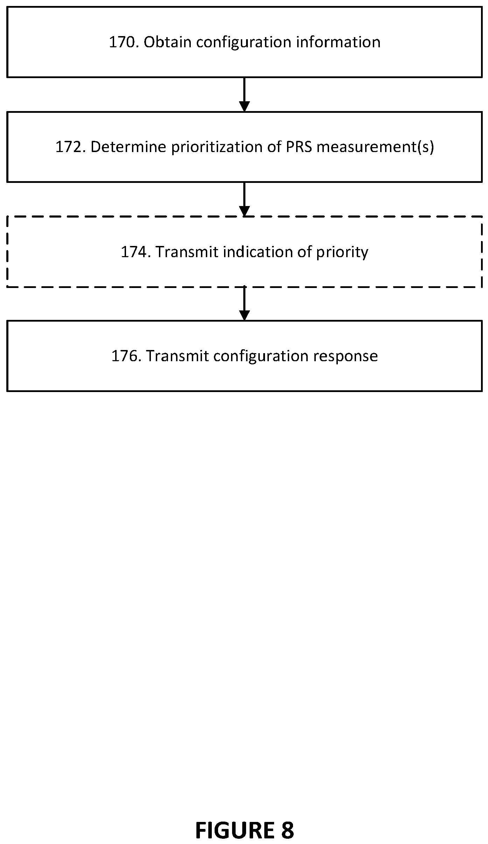

Figure 8 is a flow chart illustrating a method which can be performed in an access node, such as a gNB 110 as described herein. The method can include:

Step 170: The access node obtains configuration information. The configuration information can be received from a network node such as a location server (LMF). The configuration information can be a configuration request to configure a positioning reference signal (PRS) measurement window for at least one wireless device and can include an indication of priority associated with one or more PRS measurement(s). The configuration information can be received via NRPPa signaling and/or F1AP signaling.

Step 172: The access node determines prioritization of one or more PRS measurement(s) in accordance with the configuration information. In some embodiments, data traffic can be prioritized over PRS. In other embodiments, PRS can be prioritized over other data traffic. In some embodiments, the access node can determine to prioritize PRS measurements within a measurement window.

Step 174: Optionally, the access node transmits an indication of the determined priority to one or more wireless device(s). The access node can signal the priority indication via a DCI message. In some embodiment, the access node can also transmit an indication of priority to a network node, such as LMF 108. The access node can transmit the indication to the network node via a NRPPa message. The indication can indicate that one or more PRS(s) has been deprioritized.

Step 176: The access node transmits a configuration response to the network node. In some embodiments, responsive to configuring the PRS measurement window in accordance with the priority, the access node transmits a configuration response to indicate that the PRS measurement window has been successfully configured for the wireless device. In some embodiments, responsive to not configuring the PRS measurement window in accordance with the priority, the access node transmits a configuration failure to indicate that the PRS measurement window has not been configured for the wireless device. The configuration response(s) can be transmitted via NRPPa signaling and/or F1AP signaling.

It will be appreciated that in some embodiments, the access node can communicate (e.g. transmit/receive messages) directly with a target wireless device 112. In other embodiments, messages and signals between the entities may be communicated via other nodes, such as other radio access node (e.g. gNB, eNB) 110.

It will be appreciated that one or more of the above steps can be performed simultaneously and/or in a different order. Also, steps illustrated in dashed lines are optional and can be omitted in some embodiments.

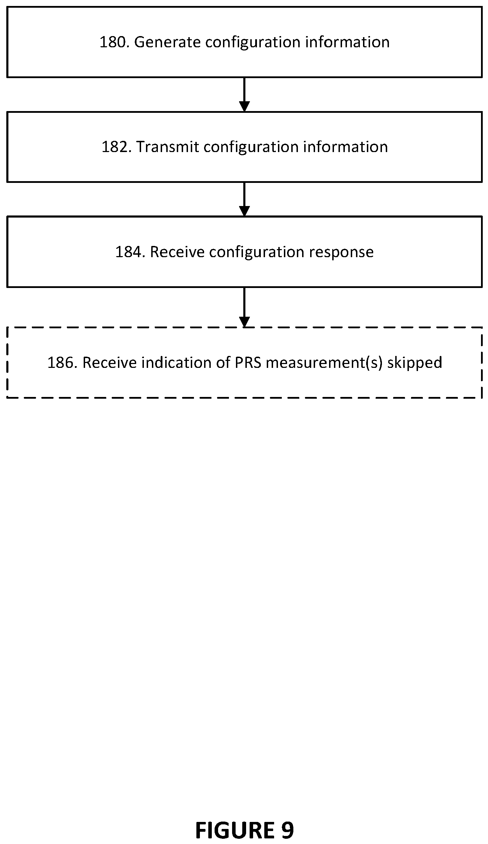

Figure 9 is a flow chart illustrating a method which can be performed in a network node, such as a location server (e.g. LMF 108) as described herein. The method can include:
Step 180: The network node generates configuration information. The configuration information can include measurement window configuration information and/or an indication of priority associated with one or more PRS measurement(s).

In some embodiments, the configuration information can further include at least one resource for measuring one or more reference signal(s) (e.g. PRS) and for deriving positioning measurements. The configuration of resource(s) can include a periodicity, an offset, a starting PRB, a bandwidth, an ending PRB, a starting symbol, a number of consecutive symbols, an end symbol, and/or other configuration parameters defining the position in frequency, time, and/or bandwidth of the reserved resource.

Step 182: The network node transmits the generated configuration information. The configuration information can be transmitted to an access node and/or a wireless device. The information can be transmitted in a configuration request message to configure the positioning reference signal (PRS) measurement window for at least one wireless device. The configuration request can include an indication of the priority associated with the PRS measurement. Configuration information can be transmitted to the access node via NRPPa signaling and/or F1AP signaling and transmitted to the wireless device via LPP signaling.

Step 184: The network node can receive, from the access node and/or the wireless device, a configuration response. The configuration response can indicate that the PRS measurement window has been successfully configured for the wireless device or, alternatively, indicate that the PRS measurement window has not been configured. In some embodiments, this can include an indication that one or more PRS/PRS measurement has been deprioritized. The configuration response(s) can be received via NRPPa signaling and/or F1AP signaling.

Step 186: Optionally, the network node can receive, from the access node and/or the wireless device, an indication that one or more PRS measurement has skipped or not performed.

It will be appreciated that in some embodiments, the network node can communicate (e.g. transmit/receive messages) directly with a target wireless device 112. In other embodiments, messages and signals between the entities may be communicated via other nodes, such as radio access node (e.g. gNB, eNB) 110.

It will be appreciated that one or more of the above steps can be performed simultaneously and/or in a different order. Also, steps illustrated in dashed lines are optional and can be omitted in some embodiments.

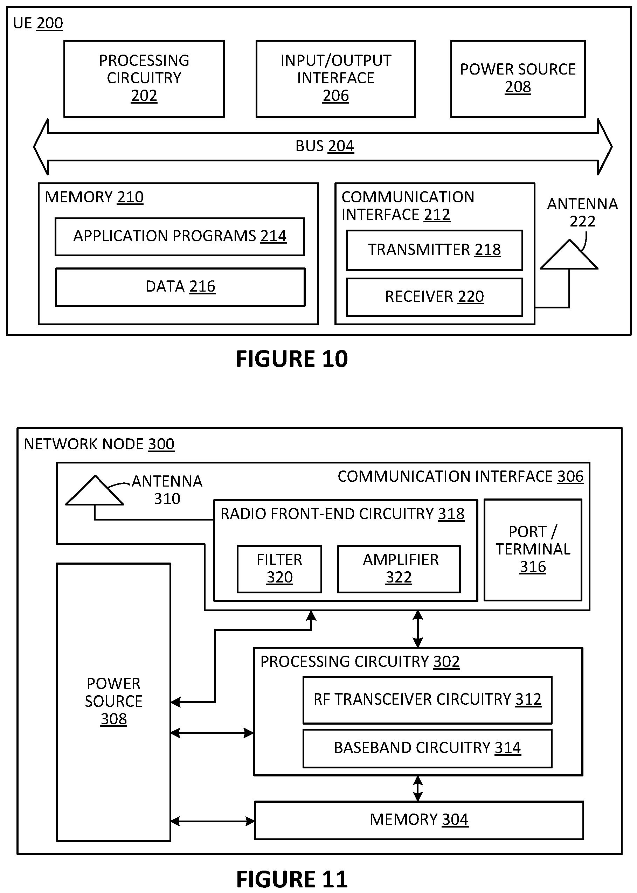

Figure 10 shows a UE 200, which may be an embodiment of the UE 112 of Figure 4 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 200 includes processing circuitry 202 that is operatively coupled via a bus 204 to an input/output interface 206, a power source 208, a memory 210, a communication interface 212, and/or any other component, or any combination thereof. Certain UEs may utilize all or a subset of the components shown in Figure 8. The level of integration between the components may vary from one UE to another UE. Further, certain UEs may contain multiple instances of a component, such as multiple processors, memories, transceivers, transmitters, receivers, etc.

The processing circuitry 202 is configured to process instructions and data and may be configured to implement any sequential state machine operative to execute instructions stored as machine-readable computer programs in the memory 210. The processing circuitry 202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 202 may include multiple central processing units (CPUs).

In the example, the input/output interface 206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 208 is structured as a battery or battery pack. Other types of power sources, such as an external power source (e.g., an electricity outlet), photovoltaic device, or power cell, may be used. The power source 208 may further include power circuitry for delivering power from the power source 208 itself, and/or an external power source, to the various parts of the UE 200 via input circuitry or an interface such as an electrical power cable. Delivering power may be, for example, for charging of the power source 208. Power circuitry may perform any formatting, converting, or other modification to the power from the power source 208 to make the power suitable for the respective components of the UE 200 to which power is supplied.

The memory 210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 210 includes one or more application programs 214, such as an operating system, web browser application, a widget, gadget engine, or other application, and corresponding data 216. The memory 210 may store, for use by the UE 200, any of a variety of various operating systems or combinations of operating systems.

The memory 210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 210 may allow the UE 200 to access instructions, application programs and the like, stored on transitory or non-transitory memory media, to off-load data, or to upload data. An article of manufacture, such as one utilizing a communication system may be tangibly embodied as or in the memory 210, which may be or comprise a device-readable storage medium.

The processing circuitry 202 may be configured to communicate with an access network or other network using the communication interface 212. The communication interface 212 may comprise one or more communication subsystems and may include or be communicatively coupled to an antenna 222. The communication interface 212 may include one or more transceivers used to communicate, such as by communicating with one or more remote transceivers of another device capable of wireless communication (e.g., another UE or a network node in an access network). Each transceiver may include a transmitter 218 and/or a receiver 220 appropriate to provide network communications (e.g., optical, electrical, frequency allocations, and so forth). Moreover, the transmitter 218 and receiver 220 may be coupled to one or more antennas (e.g., antenna 222) and may share circuit components, software or firmware, or alternatively be implemented separately.

In the illustrated embodiment, communication functions of the communication interface 212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Nonlimiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 200 shown in Figure 10.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 11 shows a network node 300, which may be an embodiment of the access node 110 or the core network node 108 of Figure 4, in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 300 includes a processing circuitry 302, a memory 304, a communication interface 306, and a power source 308. The network node 300 may be composed of multiple physically separate components (e.g., a NodeB component and a RNC component, or a BTS component and a BSC component, etc.), which may each have their own respective components. In certain scenarios in which the network node 300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 300 may be configured to support multiple radio access technologies (RATs). In such embodiments, some components may be duplicated (e.g., separate memory 304 for different RATs) and some components may be reused (e.g., a same antenna 310 may be shared by different RATs). The network node 300 may also include multiple sets of the various illustrated components for different wireless technologies integrated into network node 300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 300.

The processing circuitry 302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 300 components, such as the memory 304, to provide network node 300 functionality.

In some embodiments, the processing circuitry 302 includes a system on a chip (SOC). In some embodiments, the processing circuitry 302 includes one or more of radio frequency (RF) transceiver circuitry 312 and baseband processing circuitry 314. In some embodiments, the radio frequency (RF) transceiver circuitry 312 and the baseband processing circuitry 314 may be on separate chips (or sets of chips), boards, or units, such as radio units and digital units. In alternative embodiments, part or all of RF transceiver circuitry 312 and baseband processing circuitry 314 may be on the same chip or set of chips, boards, or units.

The memory 304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 302. The memory 304 may store any suitable instructions, data, or information, including a computer program, software, an application including one or more of logic, rules, code, tables, and/or other instructions capable of being executed by the processing circuitry 302 and utilized by the network node 300. The memory 304 may be used to store any calculations made by the processing circuitry 302 and/or any data received via the communication interface 306. In some embodiments, the processing circuitry 302 and memory 304 is integrated.

The communication interface 306 is used in wired or wireless communication of signaling and/or data between a network node, access network, and/or UE. As illustrated, the communication interface 306 comprises port(s)/terminal(s) 316 to send and receive data, for example to and from a network over a wired connection. The communication interface 306 also includes radio front-end circuitry 318 that may be coupled to, or in certain embodiments a part of, the antenna 310. Radio front-end circuitry 318 comprises filters 320 and amplifiers 322. The radio front-end circuitry 318 may be connected to an antenna 310 and processing circuitry 302. The radio front-end circuitry may be configured to condition signals communicated between antenna 310 and processing circuitry 302. The radio front-end circuitry 318 may receive digital data that is to be sent out to other network nodes or UEs via a wireless connection. The radio front-end circuitry 318 may convert the digital data into a radio signal having the appropriate channel and bandwidth parameters using a combination of filters 320 and/or amplifiers 322. The radio signal may then be transmitted via the antenna 310. Similarly, when receiving data, the antenna 310 may collect radio signals which are then converted into digital data by the radio front-end circuitry 318. The digital data may be passed to the processing circuitry 302. In other embodiments, the communication interface may comprise different components and/or different combinations of components.

In certain alternative embodiments, the network node 300 does not include separate radio front-end circuitry 318, instead, the processing circuitry 302 includes radio front-end circuitry and is connected to the antenna 310. Similarly, in some embodiments, all or some of the RF transceiver circuitry 312 is part of the communication interface 306. In still other embodiments, the communication interface 306 includes one or more ports or terminals 316, the radio front-end circuitry 318, and the RF transceiver circuitry 312, as part of a radio unit (not shown), and the communication interface 306 communicates with the baseband processing circuitry 314, which is part of a digital unit (not shown).

The antenna 310 may include one or more antennas, or antenna arrays, configured to send and/or receive wireless signals. The antenna 310 may be coupled to the radio front-end circuitry 318 and may be any type of antenna capable of transmitting and receiving data and/or signals wirelessly. In certain embodiments, the antenna 310 is separate from the network node 300 and connectable to the network node 300 through an interface or port.

The antenna 310, communication interface 306, and/or the processing circuitry 302 may be configured to perform any receiving operations and/or certain obtaining operations described herein as being performed by the network node. Any information, data and/or signals may be received from a UE, another network node and/or any other network equipment. Similarly, the antenna 310, the communication interface 306, and/or the processing circuitry 302 may be configured to perform any transmitting operations described herein as being performed by the network node. Any information, data and/or signals may be transmitted to a UE, another network node and/or any other network equipment.

The power source 308 provides power to the various components of network node 300 in a form suitable for the respective components (e.g., at a voltage and current level needed for each respective component). The power source 308 may further comprise, or be coupled to, power management circuitry to supply the components of the network node 300 with power for performing the functionality described herein. For example, the network node 300 may be connectable to an external power source (e.g., the power grid, an electricity outlet) via an input circuitry or interface such as an electrical cable, whereby the external power source supplies power to power circuitry of the power source 308. As a further example, the power source 308 may comprise a source of power in the form of a battery or battery pack which is connected to, or integrated in, power circuitry. The battery may provide backup power should the external power source fail.

Embodiments of the network node 300 may include additional components beyond those shown in Figure 11 for providing certain aspects of the network node's functionality, including any of the functionality described herein and/or any functionality necessary to support the subject matter described herein. For example, the network node 300 may include user interface equipment to allow input of information into the network node 300 and to allow output of information from the network node 300. This may allow a user to perform diagnostic, maintenance, repair, and other administrative functions for the network node 300.

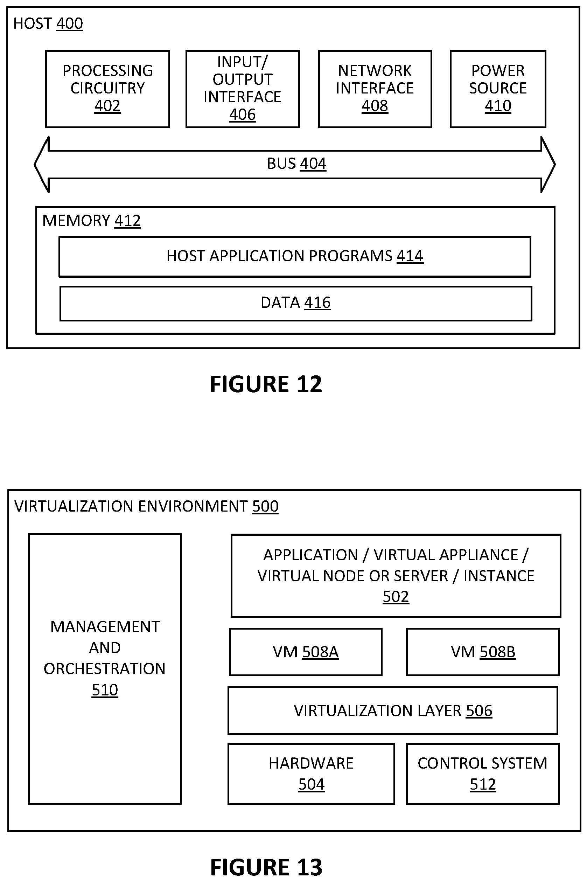

Figure 12 is a block diagram of a host 400, which may be an embodiment of the host 116 of Figure 4, in accordance with various aspects described herein. As used herein, the host 400 may be or comprise various combinations hardware and/or software, including a standalone server, a blade server, a cloud-implemented server, a distributed server, a virtual machine, container, or processing resources in a server farm. The host 400 may provide one or more services to one or more UEs.

The host 400 includes processing circuitry 402 that is operatively coupled via a bus 404 to an input/output interface 406, a network interface 408, a power source 410, and a memory 412. Other components may be included in other embodiments. Features of these components may be substantially similar to those described with respect to the devices of previous figures, such as Figures 8 and 9, such that the descriptions thereof are generally applicable to the corresponding components of host 400.

The memory 412 may include one or more computer programs including one or more host application programs 414 and data 416, which may include user data, e.g., data generated by a UE for the host 400 or data generated by the host 400 for a UE. Embodiments of the host 400 may utilize only a subset or all of the components shown. The host application programs 414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 414 may also provide for user authentication and licensing checks and may periodically report health, routes, and content availability to a central node, such as a device in or on the edge of a core network. Accordingly, the host 400 may select and/or indicate a different host for over-the-top services for a UE. The host application programs 414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 13 is a block diagram illustrating a virtualization environment 500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 502 (which may alternatively be called software instances, virtual appliances, network functions, virtual nodes, virtual network functions, etc.) are run in the virtualization environment 500 to implement some of the features, functions, and/or benefits of some of the embodiments disclosed herein.

Hardware 504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 506 (also referred to as hypervisors or virtual machine monitors (VMMs)), provide VMs 508a and 508b (one or more of which may be generally referred to as VMs 508), and/or perform any of the functions, features and/or benefits described in relation with some embodiments described herein. The virtualization layer 506 may present a virtual operating platform that appears like networking hardware to the VMs 508.

The VMs 508 comprise virtual processing, virtual memory, virtual networking or interface and virtual storage, and may be run by a corresponding virtualization layer 506. Different embodiments of the instance of a virtual appliance 502 may be implemented on one or more of VMs 508, and the implementations may be made in different ways. Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, a VM 508 may be a software implementation of a physical machine that runs programs as if they were executing on a physical, non-virtualized machine. Each of the VMs 508, and that part of hardware 504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 508 on top of the hardware 504 and corresponds to the application 502.

Hardware 504 may be implemented in a standalone network node with generic or specific components. Hardware 504 may implement some functions via virtualization. Alternatively, hardware 504 may be part of a larger cluster of hardware (e.g. such as in a data center or CPE) where many hardware nodes work together and are managed via management and orchestration 510, which, among others, oversees lifecycle management of applications 502. In some embodiments, hardware 504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 512 which may alternatively be used for communication between hardware nodes and radio units.

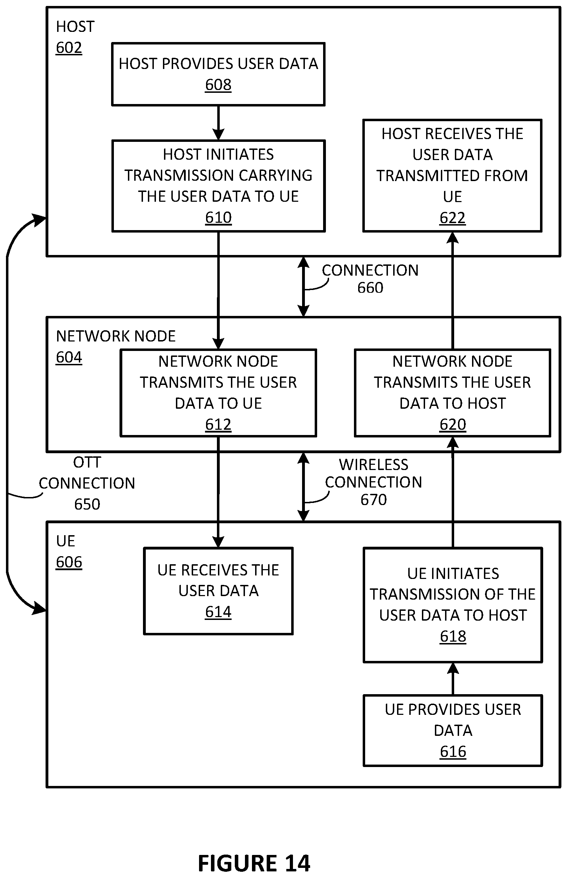

Figure 14 shows a communication diagram of a host 602 communicating via a network node 604 with a UE 606 over a partially wireless connection in accordance with some embodiments. Example implementations, in accordance with various embodiments, of the UE (such as a UE 112A of Figure 4 and/or UE 200 of Figure 8), network node (such as network node 110A of Figure 4 and/or network node 300 of Figure 9), and host (such as host 116 of Figure 4 and/or host 400 of Figure 10) discussed in the preceding paragraphs will now be described with reference to Figure 12.

Like host 400, embodiments of host 602 include hardware, such as a communication interface, processing circuitry, and memory. The host 602 also includes software, which is stored in or accessible by the host 602 and executable by the processing circuitry. The software includes a host application that may be operable to provide a service to a remote user, such as the UE 606 connecting via an over-the-top (OTT) connection 650 extending between the UE 606 and host 602. In providing the service to the remote user, a host application may provide user data which is transmitted using the OTT connection 650.

The network node 604 includes hardware enabling it to communicate with the host 602 and UE 606. The connection 660 may be direct or pass through a core network (like core network 106 of Figure 4) and/or one or more other intermediate networks, such as one or more public, private, or hosted networks. For example, an intermediate network may be a backbone network or the Internet.

The UE 606 includes hardware and software, which is stored in or accessible by UE 606 and executable by the UE's processing circuitry. The software includes a client application, such as a web browser or operator-specific "app" that may be operable to provide a service to a human or non-human user via UE 606 with the support of the host 602. In the host 602, an executing host application may communicate with the executing client application via the OTT connection 650 terminating at the UE 606 and host 602. In providing the service to the user, the UE's client application may receive request data from the host's host application and provide user data in response to the request data. The OTT connection 650 may transfer both the request data and the user data. The UE's client application may interact with the user to generate the user data that it provides to the host application through the OTT connection 650.

The OTT connection 650 may extend via a connection 660 between the host 602 and the network node 604 and via a wireless connection 670 between the network node 604 and the UE 606 to provide the connection between the host 602 and the UE 606. The connection 660 and wireless connection 670, over which the OTT connection 650 may be provided, have been drawn abstractly to illustrate the communication between the host 602 and the UE 606 via the network node 604, without explicit reference to any intermediary devices and the precise routing of messages via these devices.

As an example of transmitting data via the OTT connection 650, in step 608, the host 602 provides user data, which may be performed by executing a host application. In some embodiments, the user data is associated with a particular human user interacting with the UE 606. In other embodiments, the user data is associated with a UE 606 that shares data with the host 602 without explicit human interaction. In step 610, the host 602 initiates a transmission carrying the user data towards the UE 606. The host 602 may initiate the transmission responsive to a request transmitted by the UE 606. The request may be caused by human interaction with the UE 606 or by operation of the client application executing on the UE 606. The transmission may pass via the network node 604, in accordance with the teachings of the embodiments described throughout this disclosure. Accordingly, in step 612, the network node 604 transmits to the UE 606 the user data that was carried in the transmission that the host 602 initiated, in accordance with the teachings of the embodiments described throughout this disclosure. In step 614, the UE 606 receives the user data carried in the transmission, which may be performed by a client application executed on the UE 606 associated with the host application executed by the host 602.

In some examples, the UE 606 executes a client application which provides user data to the host 602. The user data may be provided in reaction or response to the data received from the host 602. Accordingly, in step 616, the UE 606 may provide user data, which may be performed by executing the client application. In providing the user data, the client application may further consider user input received from the user via an input/output interface of the UE 606. Regardless of the specific manner in which the user data was provided, the UE 606 initiates, in step 618, transmission of the user data towards the host 602 via the network node 604. In step 620, in accordance with the teachings of the embodiments described throughout this disclosure, the network node 604 receives user data from the UE 606 and initiates transmission of the received user data towards the host 602. In step 622, the host 602 receives the user data carried in the transmission initiated by the UE 606.

One or more of the various embodiments improve the performance of OTT services provided to the UE 606 using the OTT connection 650, in which the wireless connection 670 forms the last segment. More precisely, the teachings of these embodiments may improve the handling of colliding signals and/or channels and thereby provide benefits such as improving measurement latency and bypassing the measurement gap request procedure to improve positioning quality.

In an example scenario, factory status information may be collected and analyzed by the host 602. As another example, the host 602 may process audio and video data which may have been retrieved from a UE for use in creating maps. As another example, the host 602 may collect and analyze real-time data to assist in controlling vehicle congestion (e.g., controlling traffic lights). As another example, the host 602 may store surveillance video uploaded by a UE. As another example, the host 602 may store or control access to media content such as video, audio, VR or AR which it can broadcast, multicast or unicast to UEs. As other examples, the host 602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 650 between the host 602 and UE 606, in response to variations in the measurement results. The measurement procedure and/or the network functionality for reconfiguring the OTT connection may be implemented in software and hardware of the host 602 and/or UE 606. In some embodiments, sensors (not shown) may be deployed in or in association with other devices through which the OTT connection 650 passes; the sensors may participate in the measurement procedure by supplying values of the monitored quantities exemplified above, or supplying values of other physical quantities from which software may compute or estimate the monitored quantities. The reconfiguring of the OTT connection 650 may include message format, retransmission settings, preferred routing etc.; the reconfiguring need not directly alter the operation of the network node 604. Such procedures and functionalities may be known and practiced in the art. In certain embodiments, measurements may involve proprietary UE signaling that facilitates measurements of throughput, propagation times, latency and the like, by the host 602. The measurements may be implemented in that software causes messages to be transmitted, in particular empty or 'dummy' messages, using the OTT connection 650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- 6G: 6^{th} Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH: Ec/No CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- eMBMS: evolved Multimedia Broadcast Multicast Services
- E-SMLC: Evolved-Serving Mobile Location Centre
- ECGI: Evolved CGI
- eNB: E-UTRAN NodeB
- ePDCCH: Enhanced Physical Downlink Control Channel
- E-SMLC: Evolved Serving Mobile Location Center
- E-UTRA: Evolved UTRA
- E-UTRAN: Evolved UTRAN
- FDD: Frequency Division Duplex
- FFS: For Further Study
- gNB: Base station in NR
- GNSS: Global Navigation Satellite System
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MAC: Message Authentication Code
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDCP: Packet Data Convergence Protocol
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLC: Radio Link Control
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDAP: Service Data Adaptation Protocol
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- USIM: Universal Subscriber Identity Module
- UTDOA: Uplink Time Difference of Arrival
- WCDMA: Wide CDMA
- WLAN: Wide Local Area Network

## Claims

1. A method performed by a gNB (100), the method comprising:
receiving (120, 142, 170), from a Location Management Function, LMF/gNB Control Unit, gNB-CU, (108), a configuration request to configure a positioning reference signal, PRS, measurement window for a wireless device (112);
determining (122, 146, 172) whether to configure the PRS measurement window in accordance with a priority associated with the PRS measurement; and
responsive to configuring the PRS measurement window in accordance with the priority, transmitting (128, 150, 176) a configuration response to the LMF/gNB-CU to confirm successful configuration of the PRS measurement window, wherein the configuration response includes an indication that a PRS measurement has been skipped.

2. The method of claim 1, wherein the configuration request includes an indication of the priority associated with the PRS measurement.

3. The method of claim 1 or 2, wherein:
- at least one of the configuration request and the configuration response is transmitted via NR Positioning Protocol A, NRPPa, signaling; and/or
- at least one of the configuration request and the configuration response is transmitted via F1 Application Protocol, F1AP, signaling.

4. The method of any one of claims 1 to 3, further comprising, responsive to not configuring the PRS measurement window in accordance with the priority, transmitting a configuration failure to the LMF/gNB-CU.

5. The method of claim 4, wherein the configuration failure indicates that the PRS measurement window has not been configured by the gNB.

6. The method of any one of claims 1 to 5, wherein:
- the method further comprises transmitting (140), to the wireless device, configuration information associated with the PRS measurement window; and/or
- the method further comprises transmitting (174), to the wireless device, an indication of the priority associated with the PRS measurement.

7. The method of any one of claims 1 to 6, further comprising, receiving (130, 154), from the wireless device, an indication that a PRS measurement has been skipped in accordance with the priority.

8. A computer-readable medium (304) comprising code portions which, when executed on a processing circuitry (302) of a gNB (100, 300), configure the processor to perform the steps of a method according to any one of claims 1 to 7.

9. A gNB (100, 300) comprising a radio interface (306) and processing circuitry (302) configured to perform all steps according to any one of claims 1 to 7.

10. A method performed by a Location Management Function, LMF/gNB Control Unit, gNB-CU, (108), the method comprising:
generating (180) configuration information associated with a positioning reference signal, PRS, measurement window;
transmitting (120, 142, 182), to a gNB (100), a configuration request to configure the positioning reference signal, PRS, measurement window for a wireless device (112); and
receiving (128, 150, 184), from the gNB, a configuration response confirming successful configuration of the PRS measurement window, wherein the configuration response includes an indication that a PRS measurement has been skipped.

11. The method of claim 10, wherein the configuration request includes an indication of a priority associated with the PRS measurement.

12. The method of any claim 10 or 11, wherein:
- at least one of the configuration request and the configuration response is transmitted via NR Positioning Protocol A, NRPPa, signaling; and/or
- at least one of the configuration request and the configuration response is transmitted via F1 Application Protocol, F1AP, signaling.

13. The method of any one of claims 10 to 12, further comprising, receiving (186), from the wireless device, an indication that a PRS measurement has been skipped in accordance with a priority.

14. A computer-readable medium (304) comprising code portions which, when executed on a processing circuitry (302) of a Location Management Function, LMF/gNB Control Unit, gNB-CU, (108, 300), configure the processor to perform the steps of a method according to any one of claims 10 to 13.

15. A Location Management Function, LMF/gNB Control Unit, gNB-CU, (108, 300) comprising a radio interface (306) and processing circuitry (302) configured to perform all steps according to any one of claims 10 to 13.

## Patentansprüche

1. Verfahren, das von einer gNB (100) durchgeführt wird, wobei das Verfahren umfasst:
Empfangen (120, 142, 170), von einer Ortsverwaltungsfunktions-, LMF/gNB-, Steuereinheit, gNB-CU, (108), einer Konfigurationsanforderung, um ein Positionierungsreferenzsignal-, PRS-, Messfenster für eine drahtlose Vorrichtung (112) zu konfigurieren;
Bestimmen (122, 146, 172), ob das PRS-Messfenster gemäß einer mit der PRS-Messung assoziierten Priorität zu konfigurieren ist; und
als Reaktion auf die Konfiguration des PRS-Messfensters gemäß der Priorität, Übertragen (128, 150, 176) einer Konfigurationsantwort an die LMF/gNB-CU, um die erfolgreiche Konfiguration des PRS-Messfensters zu bestätigen, wobei die Konfigurationsantwort eine Angabe umfasst, dass eine PRS-Messung übersprungen wurde.

2. Verfahren nach Anspruch 1, wobei die Konfigurationsanforderung eine Angabe der mit der PRS-Messung assoziierten Priorität umfasst.

3. Verfahren nach Anspruch 1 oder 2, wobei:
- zumindest eines aus der Konfigurationsanforderung und der Konfigurationsantwort über NR-Positionierungsprotokoll A-, NRPPa-, Signalisierung übertragen wird; und/oder
- zumindest eines aus der Konfigurationsanforderung und der Konfigurationsantwort über F1-Anwendungsprotokoll-, F1AP-, Signalisierung übertragen wird.

4. Verfahren nach einem der Ansprüche 1 bis 3, das ferner, als Reaktion darauf, dass das PRS-Messfenster nicht gemäß der Priorität konfiguriert wird, ein Übertragen eines Konfigurationsfehlers an die LMF/gNB-CU umfasst.

5. Verfahren nach Anspruch 4, wobei der Konfigurationsfehler angibt, dass das PRS-Messfenster von der gNB nicht konfiguriert wurde.

6. Verfahren nach einem der Ansprüche 1 bis 5, wobei:
- das Verfahren ferner ein Übertragen (140), an die drahtlose Vorrichtung, von mit dem PRS-Messfenster assoziierten Konfigurationsinformationen umfasst; und/oder
- das Verfahren ferner ein Übertragen (174), an die drahtlose Vorrichtung, einer Angabe der mit der PRS-Messung assoziierten Priorität umfasst.

7. Verfahren nach einem der Ansprüche 1 bis 6, das ferner ein Empfangen (130, 154), von der drahtlosen Vorrichtung, einer Angabe umfasst, dass eine PRS-Messung gemäß der Priorität übersprungen wurde.

8. Computerlesbares Medium (304), das Codeabschnitte umfasst, die bei Ausführung auf einer Prozessorschaltung (302) einer gNB (100, 300) den Prozessor konfigurieren, die Schritte eines Verfahrens nach einem der Ansprüche 1 bis 7 durchzuführen.

9. gNB (100, 300), die eine Funkschnittstelle (306) und eine Verarbeitungsschaltung (302) umfasst, die konfiguriert sind, um alle Schritte gemäß einem der Ansprüche 1 bis 7 auszuführen.

10. Verfahren, das von einer Ortsverwaltungsfunktions-, LMF/gNB-, Steuereinheit, gNB-CU, (108) durchgeführt wird, wobei das Verfahren umfasst:
Erzeugen (180) von Konfigurationsinformationen, die mit einem Positionierungsreferenzsignal-, PRS-, Messfenster assoziiert sind;
Übertragen (120, 142, 182), an eine gNB (100), einer Konfigurationsanforderung, um das Positionierungsreferenzsignal-, PRS-, Messfenster für eine drahtlose Vorrichtung (112) zu konfigurieren; und
Empfangen (128, 150, 184), von der gNB, einer Konfigurationsantwort, die die erfolgreiche Konfiguration des PRS-Messfensters bestätigt, wobei die Konfigurationsantwort eine Angabe umfasst, dass eine PRS-Messung übersprungen wurde.

11. Verfahren nach Anspruch 10, wobei die Konfigurationsanforderung eine Angabe einer mit der PRS-Messung assoziierten Priorität umfasst.

12. Verfahren nach einem der Ansprüche 10 oder 11, wobei:
- zumindest eines aus der Konfigurationsanforderung und der Konfigurationsantwort über NR-Positionierungsprotokoll A-, NRPPa-, Signalisierung übertragen wird; und/oder
- zumindest eines aus der Konfigurationsanforderung und der Konfigurationsantwort aus über F1-Anwendungsprotokoll-, F1AP-, Signalisierung übertragen wird.

13. Verfahren nach einem der Ansprüche 10 bis 12, das ferner ein Empfangen (186), von der drahtlosen Vorrichtung, einer Angabe umfasst, dass eine PRS-Messung gemäß einer Priorität übersprungen wurde.

14. Computerlesbares Medium (304), das Codeabschnitte umfasst, die bei Ausführung auf einer Prozessorschaltung (302) einer Ortsverwaltungsfunktions-, LMF/gNB-, Steuereinheit, gNB-CU, (108, 300) den Prozessor konfigurieren, die Schritte eines Verfahrens nach einem der Ansprüche 10 bis 13 durchzuführen.

15. Ortsverwaltungsfunktions-, LMF/gNB-, Steuereinheit, gNB-CU, (108, 300), die eine Funkschnittstelle (306) und eine Verarbeitungsschaltung (302) umfasst, die konfiguriert sind, um alle Schritte nach einem der Ansprüche 10 bis 13 durchzuführen.

## Revendications

1. Procédé réalisé par un gNB (100), le procédé comprenant :
la réception (120, 142, 170), depuis une unité de commande de fonction de gestion d'emplacement, LMF/gNB, gNB-CU, (108), d'une demande de configuration pour configurer une fenêtre de mesure de signal de référence de positionnement, PRS, pour un dispositif sans fil (112) ;
la détermination (122, 146, 172) s'il faut ou non configurer la fenêtre de mesure PRS en fonction d'une priorité associée à la mesure PRS ; et
en réponse à la configuration de la fenêtre de mesure PRS en fonction de la priorité, la transmission (128, 150, 176) d'une réponse de configuration à la LMF/gNB-CU pour confirmer une configuration réussie de la fenêtre de mesure PRS, dans lequel la réponse de configuration inclut une indication qu'une mesure PRS a été sautée.

2. Procédé selon la revendication 1, dans lequel la demande de configuration inclut une indication de la priorité associée à la mesure PRS.

3. Procédé selon la revendication 1 ou 2, dans lequel :
- au moins l'une parmi la demande de configuration et la réponse de configuration est transmise via une signalisation de protocole A de positionnement NR, NRPPa ; et/ou
- au moins l'une parmi la demande de configuration et la réponse de configuration est transmise via une signalisation de protocole d'application F1, F1AP.

4. Procédé selon l'une quelconque des revendications 1 à 3, comprenant en outre, en réponse à la non-configuration de la fenêtre de mesure PRS en fonction de la priorité, la transmission d'un échec de configuration à la LMF/gNB-CU.

5. Procédé selon la revendication 4, dans lequel l'échec de configuration indique que la fenêtre de mesure PRS n'a pas été configurée par le gNB.

6. Procédé selon l'une quelconque des revendications 1 à 5, dans lequel :
- le procédé comprend en outre la transmission (140), au dispositif sans fil, d'informations de configuration associées à la fenêtre de mesure PRS ; et/ou
- le procédé comprend en outre la transmission (174), au dispositif sans fil, d'une indication de la priorité associée à la mesure PRS.

7. Procédé selon l'une quelconque des revendications 1 à 6, comprenant en outre la réception (130, 154), depuis le dispositif sans fil, d'une indication qu'une mesure PRS a été sautée en fonction de la priorité.

8. Support lisible par ordinateur (304) comprenant des parties de code qui, lorsqu'elles sont exécutées sur une circuiterie de traitement (302) d'un gNB (100, 300), configurent le processeur pour réaliser les étapes d'un procédé selon l'une quelconque des revendications 1 à 7.

9. gNB (100, 300) comprenant une interface radio (306) et une circuiterie de traitement (302) configurée pour réaliser toutes les étapes selon l'une quelconque des revendications 1 à 7.

10. Procédé réalisé par une unité de commande de fonction de gestion d'emplacement, LMF/gNB, gNB-CU, (108), le procédé comprenant :
la génération (180) d'informations de configuration associées à une fenêtre de mesure de signal de référence de positionnement, PRS ;
la transmission (120, 142, 182), à un gNB (100), d'une demande de configuration pour configurer une fenêtre de mesure de signal de référence de positionnement, PRS, pour un dispositif sans fil (112) ; et
la réception (128, 150, 184), depuis le gNB, d'une réponse de configuration confirmant une configuration réussie de la fenêtre de mesure PRS, dans lequel la réponse de configuration inclut une indication qu'une mesure PRS a été sautée.

11. Procédé selon la revendication 10, dans lequel la demande de configuration inclut une indication d'une priorité associée à la mesure PRS.

12. Procédé selon la revendication 10 ou 11, dans lequel :
- au moins l'une parmi la demande de configuration et la réponse de configuration est transmise via une signalisation de protocole A de positionnement NR, NRPPa ; et/ou
- au moins l'une parmi la demande de configuration et la réponse de configuration est transmise via une signalisation de protocole d'application F1, F1AP.

13. Procédé selon l'une quelconque des revendications 10 à 12, comprenant en outre, la réception (186), depuis le dispositif sans fil, d'une indication qu'une mesure PRS a été sautée en fonction d'une priorité.

14. Support lisible par ordinateur (304) comprenant des parties de code qui, lorsqu'elles sont exécutées sur une circuiterie de traitement (302) d'une unité de commande de fonction de gestion d'emplacement, LMF/gNB, gNB-CU, (108, 300), configurent le processeur pour réaliser les étapes d'un procédé selon l'une quelconque des revendications 10 à 13.

15. Unité de commande de fonction de gestion d'emplacement, LMF/gNB, gNB-CU, (108, 300) comprenant une interface radio (306) et une circuiterie de traitement (302) configurée pour réaliser toutes les étapes selon l'une quelconque des revendications 10 à 13.
